# EUROPÄISCHE PATENTSCHRIFT

(11) **EP 2 198 209 B1**
(45) Veröffentlichungstag und Bekanntmachung des Hinweises auf die Patenterteilung: **02.02.2011**
(21) Anmeldenummer: 08803753.6
(22) Anmeldetag: 05.09.2008
(51) Int. Cl.: F24J 3/08, F28D 20/00

(54) **ERDWÄRMESPEICHER MIT DAMPFSPERRE UND VERFAHREN ZUR VERDAMPFUNGSWÄRMENUTZUNG IM ERDWÄRMESPEICHER**
GEOTHERMAL ENERGY ACCUMULATOR HAVING A VAPOR BARRIER AND METHOD FOR UTILIZING VAPORIZATION HEAT IN THE GEOTHERMAL ENERGY ACCUMULATOR
ACCUMULATEUR GÉOTHERMIQUE AVEC BARRIÈRE PARE-VAPEUR, ET PROCÉDÉ D'UTILISATION DE LA CHALEUR D'ÉVAPORATION DANS L'ACCUMULATEUR GÉOTHERMIQUE

(30) Priorität: 07.09.2007 DE 102007044557; 07.09.2007 DE 202007013089 U
(43) Veröffentlichungstag der Anmeldung: 23.06.2010
(73) Patentinhaber: Österwitz, Karl-Heinz, 14548 Schwielowsee/OT Caputh (DE); Schmidt, Bernhard, 06869 Coswig (DE)
(72) Erfinder: Österwitz, Karl-Heinz, 14548 Schwielowsee/OT Caputh (DE); Schmidt, Bernhard, 06869 Coswig (DE)
(74) Vertreter: Claessen, Rolf
(86) Internationale Anmeldenummer: PCT/EP2008/061784
(87) Internationale Veröffentlichungsnummer: WO 2009/034032

(56) Entgegenhaltungen:
- EP-A- 1 439 362
- DE-A1- 10 200 106
- DE-A1- 10 209 373
- DE-A1-102005 001 347

## Beschreibung

Die Erfindung betrifft einen Erdwärmespeicher (im Text Klimaerdspeicher genannt) und ein Verfahrer für das Energiemanagement zur Speicherung von Wärme mit den im Oberbegriff des Anspruchs 1 und 11 genannten Merkmalen.

Die Aufgabe der Haustechnik besteht darin, die Klimafaktoren der Umgebung durch gezielte Einflussnahme auf die Bedürfnisse/Wünsche von Personen einzustellen. Mit der Bewirkung dieser Änderungen besteht die Notwendigkeit Energie zumeist aus der Umwelt zu entziehen, zuzuführen oder aus verfügbaren Energieträgern umzuwandeln. Das Klima der Erde führt dabei eindrucksvoll vor, wie wichtig es ist, das klimatische/ökologische Gleichgewicht möglichst wenig zu stören. Im Zuge der Bemühungen um eine bessere Ausnutzung der Energiequellen und zum Erschließen von bisher nicht oder nur mit geringem Wirkungsgrad nutzbaren Energiequellen steht u. a. die Nutzung der Sonne als kostenlos zur Verfügung stehende Energiequelle immer mehr im Mittelpunkt. Die Strahlungsenergie wird mit thermischen Sonnenkollektoren aufgefangen, direkt genutzt, in Wärme speichernden Anlagen abgeladen. Mit dieser Energie werden beispielsweise flüssige Medien, im technologisch einfachsten Fall Wasser erwärmt. Die Betriebskosten eines Sonnenkollektors liegen niedrig. Die Schwierigkeiten liegen darin, dass die Menge der einfallenden Sonnenenergie im täglichen und im jahreszeitlichen Rhythmus stark schwankt und sich im Grunde nie mit dem jeweiligen Bedarf deck. Damit benötigt man, sollen insbesondere Wärmepumpensysleme für die Hausenergieversorgung genutzt werden, entsprechende Wärmespeicher. Bekannt sind Wärmespeicher auf chemischer Grundlage, Wärmespeicher, in denen Energie in Form von Heißwasser gespeichert wird, und auch Wärmespeicher, bei denen einfaches Erdreich als Speichermedium betrachtet wird. Feuchtes Erdreich bietet sich als Speichermedium an, da es praktisch kostenlos zur Verfügung steht. Die kaloriemetrische Wärmekapazität bei etwa 20 Vol- % Wasseranteil entspricht etwa dem 0,3-fachen der Wärmekapazität reinen Wassers.

Solche für das Beheizen von Häusern bestimmte Erdwärmespeicher werden im Garten oder einfach in der Umgebung des zu beheizenden Hauses angelegt. Aus vielen Gründen, unter anderem wegen schlechter Isolation und wegen einem geringen Wirkungsgrad beim Übergang der Wärme in den Speicher und aus dem Speicher, verlangen die bekannten Erdwärmespeicher ein hohes Volumen. Entsprechend muss viel Erdreich zum Absenken und Einbauen der verschiedenen Isolationen ausgehohen werden. Dies verlangt seinerseits hohe Kosten. Das zu einem Haus gehörende Grundstück oder das verfügbare Erdreich sind begrenzt. Mit bekannten Erdwärmespeichern ist eine Speicherung der Sonnenenergie vom Zeitpunkt des größten Wärmeeinfalls im Sommer bis zum Zeitpunkt des höchsten Verbrauchs im Winter nur mit hohen Kosten oder überhaupt nicht möglich.

Das Gebrauchsmuster DE 76 04 366 beschreibt einen Wärmespeicher mit Verwendung von Erdreich als Speichermedium, mit Einrichtungen zum Einleiten von Wärmeenergie von einem Energieempfänger in das Erdreich und mit Einrichtungen zum Ableiten der gespeicherten Wärmeenergie zu einem Energieverbraucher der sich dadurch auszeichnet, dass ein an den Energieempfänger angeschlossener primärer Rohrkreis in Form von Schleifen durch das Erdreich geführt ist und ein an den Energieverbraucher angeschlossener sekundärer Rohrkreis in Form von Schleifen in geringem Abstand zu den Schleifen des primären Rohrkreises ebenfalls durch das Erdreich durchgeführt ist, wobei ein Mantel aus wärmeisolierendem Material die Schleifen mit Abstand von oben und den Seiten umschließt.

Weitere Druckschriften beschäftigen sich mit der Möglichkeit Wärme im Erdreich zu speichern. Sc beschreibt die DE 103 43 544, dass Erdwärme grundsätzlich an jedem Standort genutzt werden kann. In den oberen Schichten bis ca. 20 m hat die Sonnenstrahlung einen Einfluss auf die Bodentemperatur. In einigen Regionen der Erde können sion die ersten Meter durch Sonneneinstrahlung sogar bis auf 50°C erhitzen oder umgekehrt im Winter bis zum Gefrierpunkt oder darunter abkühlen. Daraus entsteht ein nur von der Jahreszeit abhängiger Temperaturverlauf. Die im Boden gespeicherte Sonnenenergie kann beispielsweise durch den Einsatz von horizontalen Erdko lektoren in Verbindung mit Wärmepumpen zur Gebäudebeiheizung verwendet werden. Diese Energie wird allgemein als oberflächennahe Erdwärme bezeichnet.

Die Kombination von Sonnenkollektoren auf dem Dach mit Anlagen zur Nutzung von oberflächennaher Erdwärme durch Erdkollektoren oder Erdwärmesonden und Wärmepumpen ist bekannt. Eine Stromerzeugung ist bei diesen Konzepten zumeist nicht vorgesehen.

Außer der oberflächennahen Erdwärme gibt es die Wärme im tiefen Untergrund. Sie stammt aus drei verschiedenen Quellen. Sie ist gespeicherte Energie, deren Ursprung in der wahrend der Erdentstehung frei gewordenen Gravitationsenergie liegt. Sie ist ein Rest von einer Urwärme vor der Erdentstehung. Sie entsteht aus dem Zerfall radioaktiver Isotope in der Erdkruste. Diese Wärme ist aufgrund der geringen Wärmeleitfähigkeit der Gesteine in der Erde gespeichert.

Ferner können untenrdische Wasserströme, warm- oder heißwasserführende Aquifere und durch Vulkanismus erhitze Böden ebenfalls direkt zum Heizen und zur Stromproduktion genutzt werden. Die geologischen und technischen Grundlagen dazu sind in der allgemeinen Literatur ausführlich beschrieben.

Insbesondere ist zur Nutzung der aus verschiedenen Quellen stammenden Wärme in den letzten Jahres die Verwendung der Wärmepumpentechnologie in den Vordergrund getreten.

Im Normalbetrieb einer Wärmepumpenanlage beläuft sich der Anteil der aufzuwendenden Arbeisenergie auf weniger als 25 %, um mit 75 % Umweltwärme 100 % Nutzwärme zu erzeu- gen. Das grundsätzliche Prinzip der Wärmepumpe liegt - wie auch in der Natur - in dem Transfer von Verdampfungswärme Durch Herbeiführung von Druck- und/oder Temperaturunterschieden werden im Arbeitskreislauf von Wärmepumpensystemen Medien verdampft und wieder kondensiert, wobei die aus einer Wärmequelle gewonnene Energie über eine Hausenergiezentrale in der Regel zur Raumheizung und zur Erwärmung des Brauchwasser genutzt werden kann.

Die DE 35 45 622 beschreibt einen Wärmespeicher mit hier bereits relativ niedriger Grundfläche zur Langzeitspeicherung, um fühlbare Wärme wirtschaftlich zur Verfügung zu stellen. Hier ist ein Speicherraum mit einer Wärmespeichermasse in Form von Erdreich und/oder Flüssigkeit bzw. Dampf vorgesehen, wobei eine vakuumdichte Schicht aus Kunststoff oder Blech an einer äußeren Beton-Stahlbetonwand abgestützt angeordnet ist. Der aus mindestens einem Plattenbauteil aufgebaute Speicherstandboden aus Stahlbeton, Beton und/oder Eisenmetall weist zwecks Isolation Hohlbauteile auf, wobei die Wärmespeichermasse durch mindestens eine horizontale Wärmedämmplatten in eine Mehrzahl von Speicherabteilen unlerschiedlichen Temperatur bzw. Wärmegehaltes aufgeteilt ist.

DE 102 09 373 A1 beschreibt einen Klimaerdspeicher für eine Hausenergienutzung, der aus einer ungesättigten, fluidhaltigen Wärmespeichermasse ausgebildet ist, der ein erstes Teilsystem zum Eintrag und in definierter Entfernung ein zweites Teilsystem zur Entnahme von Wärmeenergie enthält, wobei die Systeme mit ihren jeweiligen die Wärme eintragenden und entnehmenden Teilsystemen in einem den Klimaerdspeicher ausbildenden, nach unten offene, teilweise gasdicht ausgeführten Speicherraum angeordnet werden, wobei im oberen Bereich des Speichers ein Befeuchtungssysiem angeordnet ist.

Weitere Informationen zum Wärmehaushalt des Bodens sind beispielsweise auf der Internet- Seite www.hypersoil.uni-muenster.de beschrieben. Hieraus ist bekannt, dass Wärme im Boden über drei Mechanismen transportiert wird.

Wärmestrahlung Der Wärmetransport erfolgt über die Ausbreitung elektromagnetischer Wellen, spielt vor allen Dingen beim Energieaustausch zwischen Atmosphäre und Bodenoberfläche eine Rolle.

Wärmeleitung: Sie beruht auf der Übertragung kinetischer Energie beim Zusammenstoß von Molekülen und ist der wichtigste Mechanismus zum Wärmetransport in humiden Böden.

Wärmeströmung (Konvektion): Wärmeenergien werden durch Wasserdampftransport und Wasse-fluss (Grundwasser) verlagert.

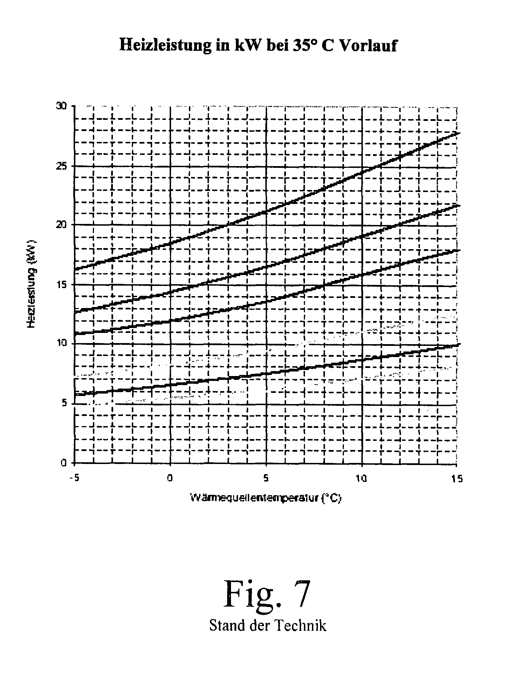

Blickt man im Diagramm in der Figur 7, auf die recht erhebliche Änderung der Heizleistung bei vergleichbar geringer Änderung der Temperaturen in den zur Verfügung stehenden Wärmequellen, werden in Bezug auf die Temperaturänderung der Wärmequelle in Verhältnis zur Heizleistung Abhängigkeiten erkennbar, die es zu beherrschen gilt.

Für alle beschriebenen, nicht hermetisch abgeschlossenen Erdwärmespeicher-Konzepte stellt sich das Problem, dass durch die ständige Zuführung von Wärmeenergie eine Austrocknung der Erdwärmespeicher erfolgt. Diese Trocknungserscheinungen, insbesondere an der Erdoberfläche der Erdwärmespeicher führen zu erheblichen Wasser- und auch Wärmeverlusten. Ein kg Wasser entzieht der Umgebung allein zur Verdampfung ca. 0,628 kWh Wärmeenergie. Im Ergebnis kommt es zu Leistungseinbrüchen, der an die Erdwärmespeicher angeschlossenen Anlagen.

Die selbsttätige Regeneration der bekannten Erdwärmespeicher dauert lange, da Erdwärme- Speicher relativ träge sind. Bekannt ist, beispielsweise mehrere Erdwärmespeicher anzulegen, denen ständig Wärme zugeführt wird, wobei stets durch eine angeschlossene Anlage nur aus einem Erdwärmespeicher Wärme entzogen wird. Somit ist eine gewisse Kontinuität der Wärmeentnahme durch Wechsel der angelegten Erdwärmespeicher gewährleistet. Dieser Aufbau ist jedoch sehr aufwändig und beispielsweise zur Wärme-Energieversorgung von Einfamilienhäuserr auch wesentlich zu teuer.

Ferner wird versuch unkontinuierliche Temperaturverläufe in Erdwärmespeichern, die entweder oberhalb oder unterhalb der gewünschten Soletemperatur der Wärmepumpe liegen, mittels Mischeinrichtungen im Solekreislauf der Wärmepumpe auszugleichen, um über einen langen Zeitraum die gewünschte Soletemperatur zu halten. Hieraus wird deutlich, dass es wünschenswert ist, die Temperatur im Erdwärmespeicher möglicht konstant im Bereich einer für die Wärme-Energieversorgung von Einfamilienhäusem idealen Soletemperatur zu halten.

Außerdem benötigen viele Systeme, um möglichst kontinuierliche Temperaturverläufe zu gewährleisten, große Volumina der Wärmespeichermassen. Zusätzliche Dämmungen und noch höhere Speichertemperaturen, wie im Stand der Technik ausgeführt, helfen zwar etwas, die Menge der benötigten Wärmespeichermasse zu begrenzen, jedoch ist hierdurch ebenfalls wirtschaftlicher Mehraufwand zu verzeichnen. Ziel der Erfindung ist es, die Volumenmengen an Wärmespeichermassen und/oder die technische Risiken Errichtung von Erdwärmespeicher zu verringern.

Wenn die Intensivierung der Energieausbeute mit geschlossenen Systemen wegen der Baugröße unc/oder des technologischen Aufwandes an Grenzen stößt, so wird vorzugsweise unter Überwindung der genannten Nachteile nach einem offenen System eines Endwärmespeichers gesucht, welcher eine geringere Baugröße besitzt und/oder der den notwendigen technologischen Aufwand der mir dem Erdwärmespeiche verbundenen Wärme-Energieversorgungs-Antage reduziert. Solche Systeme setzen sich eben nur dann durch, wenn sie ohne die riesigen Dimensionen, mit geringem technischen Aufwand auskommen.

Die Erfindung löst das Problem, beispielsweise für eine Hausenergiezentrale einen kosten- günstigen und leicht zu errichtenden Klimaerdspeicher anzubieten, welcher je nach den im und außerhalb des Klimaerdspeichers herrschenden Bedingungen eine platzsparende mit geringem technischen Aufwand realisierbare optimale Speicherung und Verfügbarkeit von Wärmeenergie mit günstigen Quelltemperaturen ermöglicht.

Die Aufgabe wird in Verbindung mit den Merkmalen des Oberbegriffs des Patentanspruchs 1 durch einen Klimaerdspeicher gelöst, der zumindest eine glockenartige obere und eine umlaufende seitliche gasundurchlässige Abdichtung des Speicherraumes des Klimaerdspeichers aufweist. Dem das ungesättigte Fluid beinhaltende Speichermedium des Klimaerdspeichers ist durch das erste System Wärme zuführbar. Innerhalb des Klimaerdspeichers erfolgt eine Erwärmung der Wärmespeichermasse bei normalen Luftdruck, gleichzeitig beginnt das Fluid zu verdampfen, wodurch über die jeweilige spezifische Wärmekapazität des flüssigen und gasförmigen Fluids eine Wärmemenge im Klimaerdspeicher innerhalb des glockenartigen Abdichtung vorhaltbar ist. Über das zweite System wird dem Klimaerdspeicher zur Nutzung in einer Hausenergiezentrale Wärme entnommen-Zunächst führt dies zur Kondensation des Fluids und zur Abkühlung der Wärmespeichermasse des Klimaerdspeichers, wobei zumindest im Bereich unter der oberen Abdichtung ein Befeuchtungssystem angeordnet ist.

Letzteres ermöglicht durch Zufuhr des Fluids das Wärmespeicherverhalten und Wärmespeichervermögen der Speichermasse des Klimaerdspeichers in einen für den Betrieb der Haus- energienutzung optimalen Bereich einzustellen.

Das zugehörige Verfahren beruht auf der Erkenntnis, dass sich im Boden bei definierten Temperaturen definierte Haftwassergehalte einstellen. Unter Haftwasser wird das Adsorbtions- und das Kapillarwasser verstanden, welches als Schicht auf der Mineralienvoerfläche sowie konisch über die Phasengrenzen der festen Bodenbestandteile verteilt ist.

Mit der chemisch-physikalischen Zusammensetzung im Bodenaufbau bestimmt sich die Schichtstärke/Mengenverteilung des Haftwassers. Stark saugende Böden wirken durch eine in dem Dipolcharakter des flüssigen Wassers begründete Anziehungswirkung und/oder durch die hohe, wirksame Oberfläche der Mineralienbestandteile.

Einige Mineraliensalze saugen sich bei Luftkontakt und entsprechender Temperatur mit Wasser förmlich voll und Ton ist beispielsweise in der Lage mehr Wasser zu speichern als Sand. Theoretisch würde es daher hinreichen, die Speichermasse einmalig mit Fluid einzustellen, hiernach die physikalischen Abläufe auf den Phasengrenzen der festen Bodenbestandteile zum Poreninhalt zu nutzen.

Bekannt ist ferner dass sich durch Eigenbewegung an der Wasseroberfläche ständig Wassermoleküle aus ihrem flüssigen oder festen Verband lösen und umgekehrt. Diese Eigenschaft wird in ihrer Ausprägung als Dampfdruck bezeichnet. Demnach liefe sich anhand des Dampfdruckverlaufs ermessen, wie viel Wasserdampf bei einer bestimmten Temperatur im Luft- folglich verdampftes Fluid - im Porenvolumen enthalten ist.

Während sich mit der Dampfdrucktabelle Aussagen treffen lassen, welcher Dampfgehalt in der Luft über den Phasengrenzen zu erwarten ist, treten im Boden Eigenschalten der festen Spei- chermasse hinzu. Durch elektrostatische Anziehung wird die Dampfdiffusion und somit das Verhalten des Wasseranteils im Fluid beeinträchtigt. Modeillhaft kann für eine bestimmte Temperatur eine minimal nötige Schichtstärke von Wasser verstanden werden, ab der die gleichen Bedingungen für den Dampfdruck gelten, wie für eine freie Wasseroberfläche. Sehr geringe Größen mineralischer Bestandteile (Ton) lassen bei niedrigen Temperaturen kaum Porenvolu- mina erwarten. Eine Dampfdiffusion ist demnach erheblich eingeschränkt.

Diesen komplexen Zusammenhang gilt es bei der Erschließung der Erdwärmenutzung zu behenschen. Die Systemsteuerung regelt abstrakt, die auf die Temperatur und Bodenbeschaffenheit optimale Wassermenge einzustellen. Nicht vomehmlich die Wärmeleitung sondern die Wärmeströmung im Porenvolumen nimmt den Hauptanteil der Speichernutzung ein. Die Eigenschaft des Klimaerdspeichers ist **dadurch gekennzeichnet, dass** es wie unter Klimabedingungen an der Bodenoberfläche möglich wird, völlig neue Leistungsparameter, beispielsweise innerhalb der Wärmeenergieversorgung einer Hausenergiezentrale, zu fahren.

Von der Erdoberflläche verdunsten täglich 1 bis 5mm Niederschlag je nach Sonneneinstrahlung, Lufttemperatur, -druck und Windverhältnissen. Berechnet auf einen m² Erdoberfläche werden damit 0,62 bis 3,14 kWh Verdampfungswärme in die Atmosphäre abgegeben.

Ein erstes System zum Eintrag der Wärmeenergie in den Erdboden bewirkt, bei entsprechendem Vorhandensein eines Fluids den gleichen Effekt. Geht die Technik darauf ein, nicht auf die spezifische Wärmekapazität des Bodens und somit einen möglichst hohen Wasseranteil, sondern die Schichtstärke des Wassers so zu wählen, dass eine geringe Temperaturänderung zu vermehrter Verdampfung/Kondensatic n führt, können die anderen Teilsysteme ein Vielfaches der sonst möglichen Leistung abrufen. Die Vorstellung der Erfinder bedient sich zur Erklärung eines Modells der räumlichen Aufteilung.

Beispielhaft sind im Boden 60 % Feststoff, 20% Fluid und 20% Poren enthalten. Für den Rauminhalt von einem Kubikmeter Erdreich hieße dies, soll sich die Schichtstärke des Fluids um 2,5% bezogen auf den beschriebenen Fluidanteil, mit 100% angenommen, ändern, sind dem Boden damit 3,14 kWh Wärmeenergie zu entziehen.

Theoretisch könnte die Kondensationsleistung eines Kubikmeters 32 Tage aufrechterhalten ein auf 4 % Fluidanteil reduziertes Speichermassenvolumen auf den Fluidanteil 20% befördern. Die Kondensation der 16% Fluid würde einem Wärmeäquivalent 100 kWh entsprechen und damit binnen Monatsfrist den Primärenergiebedarf eines Jahres für fast jeden beheizten, der Deckfläche entsprechenden Gebäudebereich bereitstellen.

Im Unterschied u seitlich und nach oben offenen Systemen kann Wasser beziehungsweise Wasserdampf - in einem glockenartigen eine obere und eine umlaufende seitliche gasundurchlässige Abdichtung aufweisenden Speicherraum - mit erhöhter Temperatur und damit meist geringerer Dichte nicht zur Erdoberfläche aufsteigen und entwichen.

Das sich mit der Energiezufuhr im Erdreich einstellende Wasserdampfgleichgewicht bleibt in eine Art Blase unter der Glocke gefangen. Die gespeicherte Wärme wird nicht für Evaporations-/Transpirationsvorgänge umgesetzt, der Wärmetransport zur Oberfläche wird erheblich verlangsamt. Gleichwohl führt ein erhöhter Wasserdampfdruch dauerhaft zu einem Konzentrationsrückgang, des in der organisch-/mineralischen Bodenphase adsorbierten Fluids (relative Trocknung).

In bevorzugter Ausgestaltung der Erfindung, weist die glockenförmige Abdeckung und das gegebenenfalls in Abhängigkeit von der Entnahmeleistung und Ebenenstärke/-anzahl ausgelegte Befeuchtungssystem über dem beziehungsweise um das als Klimaerdspeicher vorgesehene Bodenvolumen des Erdwärmespeichers herum einen gemeinsamen, schichtenartigen Aufbau auf.

Der schichtenartige Aufbau kann in vielfältigen Varianten erfolgen, die von den jeweiligen Randbedingungen abhängen. Insbesondere hängt der schichtenartige Aufbau von den jeweiligen Eigenschaften des Bodens im Klimaerdspeicher ab.

Als obere und seitliche Abdichtung muss mindestens eine Schicht als Dampfsperrschicht oder in den meisten Fällen eine Dampfsperrschicht und eine nach innen zum Klimaerdspeirher gerichtete zusätzliche Dehnschicht als Funktionsschicht angeordnet sein.

Der schichtenartige Aufbau umfasst in einer bevorzugten Ausgestaltung, die vielfäftig einsetzbar ist, im oberen Bereich beispielsweise eine erste, oberen/äußere und eine dritte, untere/innere, den Klimaerdspeicher nach oben begrenzende Funktionsschicht.

Der schichtenartige Aufbau ist in dieser Ausgestaltung im seitlich, umlaufenden Bereich des Klimaerdspeichers ebenfalls mit einer ersten, seitlichen und einer dritten, seitlichen den Klimaerdspeicher abgrenzenden Funktionsschicht ausgebildet.

Dies Funktionsschichten können als Schutzschicht und/oder Dämmschicht und/oder Dehnschicht und/oder Dränageschicht ausgebildet sein.

Die zwischen der ersten und dritten Schicht als Dampfsperre ausgebildete zweite Schicht verhindert den unkontrollierten Feuchte-/Niederschlagsein- und Feuchte-/Dampfaustrag.

Unterhalb der Dam pfsperre als zweite Schicht ist regelmäßig das Befeuchtungssystem, vorzugsweise ebenfalls schichtenartig ausgeführt, angeordnet.

Vielfältige Varianten des Schichtenaufbaus sind möglich. Die zweite Schicht als Dampfsperre und das Befeuchtungssystem innen sind dabei stets anzuordnen.

Die erste und dritte Funktionsschicht im oberen Bereich - oben und unten - beziehungsweise die erste und dritte Funktionsschicht im seitlichen Bereich - innen und außen - können jeweils entweder beide angeordnet werden oder jeweils nur eine der beiden Funktionsschichten wird angeordnet, wobei wie oben beschrieben in den meisten Fällen für die obere Abdichtung immer eine untere und für die seitlich, umlaufende Abdichtung eine innere Dehnschicht als Funktionsschicht ausgeführt wird.

Dabei können die angeordneten Funktionsschichten mit einer vorbestimmten Funktion sowohl aus Dehnschicht als auch als Schutzschicht und/oder Dämmschicht und/oder Dränageschicht ausgebildet sein.

Als Dampfsperre kommen in bevorzugter Ausgestaltung der Erfindung dampfdichte Folien, beispielsweise einfache Teichfolien oder Streifenfundamente mit aufliegenden Bodenplatten aus wasserundurchlässigem Beton oder dergleichen zum Einsatz.

Mit wasserundurchlässigem Beton als Material errichtete Bodenplatten - obere Abdichtung über entsprechend eingebauten Streifenfundamenten - seitliche Abdichtung - als Dampfsperre bedürfen keines oberen beziehungsweise äußeren Schutzes oder einer Drainage zur unterirdischen Ableitung der Staunässe.

In bevorzugter Ausgestaltung der Erfindung ermögliclnen angeordnete Befeuchtungsauslässe im Befeuchtungssystem bei ungünstiger Trockenheit oder bei Kühlungsuptioner die Herstellung des wünschenswerten Fluidhaushalts.

Die erste Funktionsschicht im oberen Bereich beziehungsweise im seitlichen Bereich die äußere Funktionsschicht wird bei mineralisch dichten Abdeckungen des Klimaerdspeichers ebenfalls als verzichtbar erachtet.

Dem Speichervolumen zuzuführendes Fluid entnimmt das Befeuchtungssystem einem Reservoir. Trinkwasser, von Schwebstoffen gereinigtes Regenwasser oder entkalktes, gefiltertes Grundwasser genügen zumeist, dass die ausschließlich unter der Dampfsperre befindlichen Wasserauslässe der Befeuchtungsleitungen nicht verstopfen. Die Drainageleitungen werden möglichst gleichmäßig über dem Speichervolumen des Klimaerdspeichers verlegt und bevorzugt aus perforiertem Leitungsmaterial endlos ausgeführt.

Aus der Bodenbeschaffenheit und dem gewünschten Arbeitsbereich bestimmt sich der wahlweise per Hand oder über eine automatische Dosiereinrichtung bestimmte, zuzuführende Fluidbedarf. Die Zuleitung zum Verteilsystem ist mit Rückschlagventil und Zähleinrichtung sowie mit einer Armatur, vorzugsweise einem Schrägsitzventil, zum manuellen Öffnen und Schließen des Verteilsystems versehen.

Im Klimaerdspeicher ist zur Ermittlung der Temperatur und der absoluten und/oder relativen Feuchte des optimalen Bereiches des Wärmespeichervermögens der fluidhaltigen Wärmespeichermasse, des Klimaerdspeichers zumindest ein Feuchtesensor und zumindest ein Temperatursensor angeordnet. Eingetragene und entzogene Wärmemengen werden mittels Wärmemengenzählern erfasst. Die Speicherkapazitäl des Fluids im Boden und somit das Verhalten bei der Entladung des Klimaerdspeichers ist mittels Befeuchtungssystem im gewünschten Betriebsbereich Steuer-, regelbar und somit optimierbar. Die Überwachung kann im einfachsten Fall durch automatische Differenzregelung erfolgen.

Eine Kragenlinie, die dem Ende der seitlichen Umfassung nach unten entspricht, grenzt den Klimaerdspeicher nach unten ab. Die Abdeckung grenzt den Klimaerdspeicher nach oben ab.

Ein im Klimaerdspeicher liegendes Teilsystem des ersten Systems zum Eintrag der Wärmeenergie s nd beispielsweise mäanderförmige Erdregister, mehrschichtige teil- oder vollflächig durchflossene Polymerplatten oder dergleichen.

Beim Einsatz von Erdregistern erfolgt eine Verlegung der Erdregister, des im Klimaerdspeicher liegenden Teilssystems des zweiten Systems zur Entnahme und des im Klimaerdspeicher liegenden Teilsystems des ersten Systems zum Eintrag von Wärmeenergie in der fluidhaltigen Wärmespeichermasse des Klimaerdspeichers horizontal und vorzugsweise schichtenartig in einem vorgebbaren, von den jeweiligen Einsatz bedingungen abhängigen Abstand.

Die Abstände/Stärken der zwischen Be- und Entladeebenen liegenden Sohlen des Klimaerdspeichers werden in Abhängigkeit der Bodenzusammensetzung ausgelegt und sind je nach liodentyp unterschiedlich.

Als Faustregel gil das beispielsweise Erdregister in wenig saugenden Böden (Kiessand) mit einem Abstand ca. 50 cm und in stark saugenden Böden (Löß/Lehm) mit einem Höhenunterschied im Abstand von ca. 25 cm zu belegen sind.

Die Anordnung erfolgt vorzugsweise horizontal in wechselnder Strömungsrichtung der Erdregister.

Über einer Wärmeeintrags- befindet sich eine Wärmentzugsebene usw. als oberste Ebene wird in bevorzugter Ausgestaltung der Erfindung eine Wärmentzugsebene angeordnet. Die als günstig erachtete Dichtedifferenz erwärmter zu kühler Dampf-/Feuchtekonzentration beschleunigt durch den entsprechenden Auftrieb in die oberen Ebenen und den Energietransfer innerhalb des Klimaerdspeichers die Kondensation/Adsorption des in das Substrat am Entzugspunkt beziehungsweise der Entzugsebene eingedampften, aufgestiegenen Wassers. Aus diesem Grund wird eine Wärmentzugsebene des sich im Klimaerdspeicher befindenden Teilsystems des zweiten Systems im Klimaerdspeicher als oberste Ebene angeordnet.

Das im Klimaerdspeicher liegende Teilsystem des ersten Systems der Hausenergiezentrale zum Eintrag der Wärmeenergie kann auch ein Systemstrahlungselement nach der EP 1 523 223 sein.

Beim Einsatz vor Erdsonden erfolgt eine Anordnung der Erdsonden des im Klimaerdspeicher liegenden, ersten Teilsystems des zum Eintrag von Wärmeenergie in die fluidhatige Wärmespeichermasse des Klimaerdspeichers vertikal, vorzugsweise bei Einsatz von mehreren Erdsonden vertikal in einem vorgebbaren Abstand.

Beim Einsatz mindestens eines oder mehrerer Systemstrahlungselemente, als das im Klimaerdspeicher liegende Teilssystem des ersten Systems zum Eintrag von Wärmeenergie in die fluidhaltige Wärmespeichermasse des Klimaerdspeichers, erfolgt eine Anordnung des Systemstrahlungselementes horizontal und/oder vertikal in einem vorgebbaren Abstand.

Schließlich wird in bevorzugter Ausgestaltung des Verfahren ein Vorlauf des Teilsystems zum Eintrag der Wärmeenergie und ein Rücklauf des Teilsystems zur Entnahme von Wärmeenergie durch einen/mehrere in/neben/über/entfernt der fluidhaltigen Wärmespeichermasse des Klimaerdspeichers angeordneten Kontaktbehälter oder eine Kontaktstrecke mit einem ebenfalls Wärmenergie befördernden/speichernden Fluid geführt.

Eine Glättung der Kennlinien durch schwankenden Wärmeeintrag des ersten Systems bzw. den schwankenden Wärmeentzug des zweiten Systems der Hausenergiezentrale wird erreicht.

Den Energieeintrag begünstigend als auch die Entzugsleistung erhöhend, wirkt sich hier die Nutzung der spezifischen Wärmekapazität/Wärmeleitfähigkeit Fluids, vorzugsweise des Wassers, aus.

Der Vorlauf des ersten Teilsystems zum Eintrag der Wärmeenergie und der Rücklauf des zweiten Teilsystems zur Entnahme von Wärmeenergie werden im einfachsten Fall als mit gegenläufigen Strömungsrichtungen in wassergefüllten Tanks eingebaute Register ausgeführt.

Handelsüblich sind beispielsweise bis 10.000 Liter fassende, aus Beton oder im Spritzgussverfahren hergestellte, durch Registereinbau oder den Anschluss mittels Plattenwärmeübertragersystemen ergänzte Tanks oder Erdtanks.

Beispielhaft sind hohe Energieeinträge aus thermischen Solarkollektoren über die Leitungen des ersten Teilsystems vielfach effektiver in dem Kontaktbehälter als im Klimaerdspeicher abgeladen.

Aus dem Kontaktbehälter können dort gespeicherte Energieüherschüsse nachts in die Speichermasse des Klimaerdspeichers entladen beziehungsweise umgeladen werden.

Neben dem kontinuierlichen Eintrag kommt der Pufferung wie auch schon bei der Verdampfungswännenutzung für die Bereitstellung der Wärmeenergie Bedeutung zu.

Mit Kontaktbehälter sind die Wirkungsgrade vielfach höher, da die Temperaturen im Klimaerdspeicher insgesamt bezogen auf Betriebszustände Wärmepumpe läuft/ruht geringeren Schwankungen unterliegt und die Temperaturspreizung für den optimalen Wirkungsgrad besser einzustellen hilft. Ein Wärmepumpensystem Ist mit Kontaktbehälter somit effektiver betreibbar.

Bevorzugt ist weiter, dass vorgebbare Abstände zwischen den im Klimaerdspeicher horizontal, schichtenartig verlegten Erdregistern und/oder vertikal angeordneten Erdsonden und/oder anderen Energiequellen bei Integration eines Kontaktbehälters oder einer Kontaktstrecke in den Klimaerdspeichern größer festgelegt oder einzelne Ebenen gänzlich entfalten und die Speicher selbst räumlich kleiner ausgeführt werden können.

Das erste System mit seinem ersten außerhalb des Erdwärmespeicher liegenden, gegebenenfalls hydraulisch zu trennenden Teilsystem zum Eintrag von Wärmeenergie in den KI maerd- Speicher ist eine thermische Solaranlage und/oder ein Kühlabsorber einer Photovoltaik-Anlage und/oder ein System auf Basis auskoppelbarer Prozesswärme anderer Systeme und/oder eine konventionelle Wärmeerzeuger-/Klimaanlage.

Das zweite Teilsystem des zweiten Systems außerhalb des Klimaerdspeichers zur Entnahme von Wärmeenergie ergänzt sich als Wärmepumpenanlage oder als konventionelles System zur Entnahme der Wärmeenergie mit Pumpengruppe, dem zugehörigen Wärmetauscher oder dergleichen.

Das zweite Teilsystem zur Entnahme von Wärmeenergie - als Wärmepumpenanlage ausgeführt kann ebenfalls mit seinem außerhalb des Klimaerdspeichers liegenden Teilsystem des zwei- ten Systems zum Eintrag (Kühlfunktion) von Wärmeenergie in den Klimaerdspeicher verwendet werden. Eine entsprechende Umschaltung gewährleistet über die Wärmepumpeanlage sowohl einen Heizungsbetrieb als auch einen Kühlbetrieb in Zusammenarbeit mit einer angeschlossenen Klimaanlage.

Durch das zugehörlge Verfahren nach Patentanspruch 11 wird das Wärmespeichervermögen der Wärmespeichermasse des Klimaerdspeichers überwacht, gesteuert und geregelt. Optimiert wird das System indem dem Klimaerdspeicher über das Befeuchtungssystem Fluid zugeführt wird, und somit die Hausenergiezentrale, in Abhängigkeit der auf den Klimaerdspeicher wirkenden physikalischen Randbedingungen in einem für den Betrieb günstigen Bereich gehalten wird.

Das neue Verfahren ist in Verbindung mit den Merkmalen des Oberbegriffs des Patentanspruchs 11 **dadurch gekennzeichnet, dass** der das ungesättigte Fluid beinhaltenden Wärmespeichermasse des Klimaerdspeichers durch das erste System Wärme zugeführt wird, die innerhalb des Klimaerdspeichers bei im Wesentlichen gleichbleibenden normalen Luftdruck zunächst zur Erwärmung der Wärmespeichermasse und des Fluids und gleichzeitig zu einer Verdampfung des Fluids führt, wodurch über die jeweilige spezifische Wärmekapazität/Verdampfungsenthalple des flüssigen und gasförmigen Fluids eine Wärmemenge im Klimaerdspeicher speicherbar sowie mit dem Druckausgleichsbestreben in Luft beweglich ist, die über das zweite System unter Kondensation des Fluids und unter Abkühlung der Wärmespeichermasse des Klimaerdspeichers und des im Klimaerdspeiche vorhandenen Fluids zur Nutzung der Wärme in einer Hausenergiezentrale entnommen wird, wobei das Wärmespeichervermögen der Wärmespeichermasse ces Klimaerdspeichers gesteuert und geregelt wird, indem dem Klimaerdspeicher über ein Befeuchtungssystem Fluid zugeführt wird, um die Hausenergiezentrale in Abhängigkeit, der auf den Klimaerdspeicher wirkenden physikalischen Bandbedingungen in einem für den Betrieb optimalen Bereich zu halten.

Bevorzugt wird die Kondensation des Fluids automatisch zu einer Rückbefeuchtung des Klimaerdspeichers führen.

Der gleichzeitige Wärmeeintrag und Wärmeentzug führt zur einer schichtenweisen Erhöhung oder Verringerung der Temperatur der Speichemasse und des Fluids und über die sich einsteigende Temperatur-/Dampfdruckdifferenz in den Schichten zur Verdampfung oder Kondensation des im Klimaerdspeicher vorhandenen Fluids von unten nach oben.

Umgekehrt verteizt sich am zweiten Teilsystem kondensiertes Fluid über die sich mit abnehmender Temperatur relativ zum Dampfdruck verstärkende Adsorbtionswirkung gleichmäßig auf den Oberflächen der festen Bestandteile der Speichermasse. Wieder in die Nähe des ersten Teilsystems zum Wärmeeintrag gelangt, beginnt der oben beschriebene Vorgang erneut.

Somit kann eine Anderung der physikalischen Parameter im Klimaerdspeicher durch Einflussgrößen, wie sie auch an der Erdoberfläche vorliegen, im Bodenkörper technisch genutzt werden.

Bei der Beladung - im Sinne eines Eintrages von Wärmeenergie über das erste System beispielsweise eine Solaranlage - des Klimaerdspeichers stellt sich unter der Glocke ein temperaturabhängiges Wasserdampfgleichgewicht ein.

Die Glocke - obere und seitliche, die Dampfditfuslon verhindernde Abdeckungvermindert daher den Energieverlust durch molekulare Eigenbewegung der Gas-/Wassermoleküle als Luft- /Wasserdampfgemisch im Klimaerdspeicher Im Innenraum wird ein delinierbarer, sich von der Umgebung als nach oben und seitlich gasundurchlässig abgrenzender, nach unten offener Klimaerdspeicherraum geschaffen.

Der freie Zugang nach unten soll insbesondere nicht durch Eintreten der Kragenlinie in permanent oberflächenwasserführende Schichten verschlossen werden, da sonst ein geschlossenes System zum Tragen käme.

Der nach unten offene Innenraum verhindert aber unter der Glocke den Aufstieg des Luft- /Wasserdampfgemischs zur Erdoberfläche und somit die Austrocknung der Speichermasse. Zwingend führt die Erhöhung der Temperatur im System zur Verringerung des Haftwassers.

Erfolgt ein Energieeintrag nun nicht durch Einstrahlung von der Oberfläche her, sondern durch Erwärmung des unteren Bereichs im Glockenvolumen, durch das erste, die Wärme entragende System, erhöht sich folglich dort die Temperatur und damit die Wasserdampfkonzentration bei sich gleichzeitig verringernder Fluidkonzentration und Dichte.

Die Bildung der Dampfblase in Abhängigkeit von der schichtenweisen Temperaturerhöhung der Wärmespeichermasse macht sich die Erfindung zu nutze.

Während der Wasserdampf im vergleichenden Beispiel in der Atmosphäre zunächst durch den Wind verteilt und später in Nebel und Wolken zu kondensieren vermag, reicht schon der Energieentzug durch die Soleleitung einer Wärmepumpe aus, den Dampf ir Wasser zu kondensieren.

Interessant ist dabei, die Vorgänge laufen bei normalen Luftdrücken ab, weshalb 11 Wasser bei ca. 20°C aus etwa 0,3m³ Dampf kondensiert. Daher wird auch deutlich, dass ein geschlossenes System diese Größenordnung bei normalem Luftdruck nicht leisten kann. In geschlossenen Systemen wird durch die Erwärmung eine ungewollte Gasdruckerhöhung eintreten und damit die Wirkung der Konzentrationsverschiebungen und des Konzentrationsausgleichs im Klimaerdspeicher mindestens teilweise aufheben.

Die in einem offenen, glockenartigen System wie hier vorliegend - Klimaerdspeicher gasdicht aber unten offen - herbeigeführte Dampfvertellung ist am ehesten mit einem Saunaaufguss vergleichbar. Allein der Dichte- und Dampfdruckunterschied unter Glocke im Klimaerdspeicher, verbunden mit dem natürlichen Energiefluss von hohem zu niederem Wärmeniveau befördert immer neuen Wasserdampf auf die Entzugsebenen.

Während die Verdampfung in der Natur die Wolkenbildung und das Abregnen befördert, saugt sich die Entzugsebene, die stets über der Eintragsebene liegt, bis zur Sättigung mit Wasser voll.

Die Beladung und der Entzug lassen sieht jedoch nicht unendlich fortsetzen. Da bei üblichen Dimensionen jedoch mit Heiz- oder Kühlenergiebedürfnissen von 40-100 kWh je m² und Jahr zu rechnen ist, wird der wesentliche Vorteil der Erfindung deutlich. 4% von absolut 14-28% Fluidanteil können von gasförmig nach flüssig überführt werden. In 8 Tagen können einem m³ Wärmespeichermasse und dem ungesättigten Anteil Fluid, % des Jahresbedarfs an Energie zum Heizen entzogen oder zum Kühlen angetragen werden.

Kein bekanntes System wartet mit diesen Parametern und annähernd konstantem Ein- trag/Entzug sowohl in Bezug auf die Wärmeenergiemenge als auch in Bezug auf die Temperatur im Klimaerdspeicher auf. Die wirtschaftliche Qualität des Einsatzes der Wä rmepumpentechnologie rückt damit in bisher nicht realisierbare Bereiche vor.

Erfahrungsgemäß gehen Planer und Installateure von jährlich 2000 Betriebsstunden der Heizungsanlagen zwischen dem 01. September und dem 30. April des Folgejahres aus. Täglich ergeben sich damit ca. 8 Betriebsstunden bezogen auf eine Anlage, manchmal etwas mehr manchmal etwas weniger.

Als Ergebnis wird daher deutlich, die Vorgaben der Planer decken sich weitestgehend mit den natürlichen Bedingungen. Wie bei der Auslegung haustechnischer Systeme lässt sich eine Annäherung an die Klimavorgaben erkennen. Aufeinander abgestimmt ergeben sich die wirtschaftlichsten, weil mit dem geringsten Arbeitsaufwand verbundenen Lösungen.

Mit dem verdeutlichten Zusammenhang werden die Kriterien für die Auslegung der zur Wärmepumpennutzung optimierten Systeme herausgestellt. Die Speichermasse muss auf den Wassergehalt eingestellt werden, in dem die Verdampfungsgeschwindigkeit annähernd der Kondensationsgeschwindigkeit entspricht. Im Ergebnis führt diese Einstellung dazu, dass über einen relativ langen Zeitraum im Eintragsbereich des ersten Teilsystems verdampftes Fluid im Entzugsbereich des zweiten Teilsystems kondensiert.

Dieser Vorgang macht weniger mit einer Temperaturänderung als mehr mit einer Konzentrationsänderung des in den Ebenen enthaltenen Wasseranteils von sich reden. Ergebnis ist, die Sohletemperatur im zweiten Teilsystem wird nicht linear zum Wärmeentzug kälter, sondern ermöglicht über Strecken und Tage die Versorgung der Wärmepumpe mit annähernd gleichen Soleparametem. Zwischen den Ebenen der Teil systeme besteht ein Temperatur/Dampfdruckgefälle, durch den freien Porenraum oder angeordnete Filzkanäle wird Wasserdampf transportiert. Damit ist die Aufgabenstellung erfüllt, mit möglichst kleinen Dimensionen von Massenspeichem die Wärmeenergie kontinuierlich, auf den optimalen Arbeitsbereich der Wärmepumpen einstellen und abzurufen zu können.

Zu beachten ist, hat sich nach entsprechend ausgedehnten Zeiträumen einer Wärmezufuhr durch das erste System im dem gesamten Speicherraum eine geringe Schichtstärke/Wasseranteil eingestellt, kann es in Folge des Anfahrens der Wärmepumpe dernoch zur Vereisung der Entzugsleitungen kommen. Dies liegt daran, dass der F uidgehalt auf eine für den Beginn des Wärmeentzugs im Bereich der Leitungen des zweiten Teilsystems zu geringe Konzentration reduziert wurde. Sich bildendes Kondensat verteilt sich nicht sofort über die warme, trockene, die Entzugsleitung umschließende Sandschicht. Der Vereisung muss durch Einleiten einer geringen Wassermenge mittels des Befeuchtungssystems bis einige Minuten vor der inbetriebnahme der Wärmepumpe vorgebeugt werden. Der Querschnitt zur Kondensatverteilung ist hergestellt. Verdampfung, Diffusion, Kondensation und Vereisung finden nicht in den die Entzugsleitungen einschließenden, diffusionsförderlichen Sandschichten sondern wie beabsichtigt zwischen den Eintrags- und Entzugsebenen statt.

Es lassen sich ohne aufwendige Analysemethoden aus den von der Wärmespeichermasse ermittelten Temperaturkennlinien optimale Dampfkonzentrationen sogenannte Kondensationswärmevorräte einstellen. Ist der in der Speichermasse angestrebte Sollwert hergestellt wird die Befeuchtung unterbrochen.

Unter der Glocke "gefangener" Wasserdampf beziehungsweise die darin gespeicherte Wärme gelangt nicht oder nur über Umwege - beispielsweise Dampfverlust im seitlichen Bereich unter- halb der seitlichen Abdichtung - an die Erdoberfläche. Die Verzögerung des Wärmetransfers mittels Dampfsperre durch die Abdichtung im oberen und seitlichen Bereich reicht aus, die Anforderungen an den Klimaerdspeicher zu erfüllen.

Die Erfindung stellt somit in Hinsicht auf a) die vornehmliche Nutzung der Verdampfungswärme der fluidhaltigen Wärmespeichermasse, b) die erhebliche Verminderung des Raumbedarfs, c) die Kontinuität der Be- und Entladezyklen, d) die optimierte Wärmequellentmperatur für Wärmepumpen, e) die Verringerung des Bedarfs an Primärenergie, f) die gleichzeitigen Nutzungsmöglichkeiten in Klima- und/oder Brauchwasser- und/oder Helzsystemen, eine völlig neue Alternative dar.

Die Erfindung wird nachfolgend an einem Ausführungsbeispiel anhand der zugehörigen Figuren näher erläutert.

Es zeigen:
- Figur 1: eine beispielhafte Hausenergiezentrale mit Klimaerdspeicher;
- Figur 1A: eine vergrößerte schematische Schnittdarstellung - vertikal geschnit- ten - eines ersten Ausführungsbeispiels einer Schichtenfolge einer oberen Abdeckung des Klimaerdspeichers;
- Figur 2: eine vergrößerte schematische Schnittdarstellung - vertikal geschnit- ten eines zweiten Ausführungsbeispiels der Schichtenfolge der obe- ren Abdeckung des Klimaerdspeichers;
- Figur 3: eine vergrößerte schematische Schnittdarstellung - vertikal geschnit- ten - eines dritten Ausführungsbeispiels der Schichtenfolge der obe- ren Abdeckung des Klimaerdspeichers;
- Figur 4: eine vergrößerte schematische Schnittdarstellung - vertikal geschnit- ten - eines vierten Ausführungsbeispiels der Schichtenfolge der obe- ren Abdeckung des Klimaerdspeichers;
- Figur 5A, 5B: eine vergrößerte schematische Schnittdarstellung - vertikal 5A und horizontal 5B geschnitten - eines fünften Ausführungsbeispiels der Schichtenfolge der seitli- chen Abdeckung des Klimaerdspeichers;
- Figur 6: eine vergrößerte schematische Schnittdarstellung - vertikal geschnit- ter - eines sechsten Ausführungsbeispiels der Schichtenfolge der oberen und seitlichen Abdeckung des Klimaerdspeichers;
- Figur 7: Diagramm zur Darstellung der Heizleistung von Wärmepumpen in kW in Abhängigkeit von der Wärmequellentemperatur in °C [Quelle: EJ- cotherm AG. Schweiz]

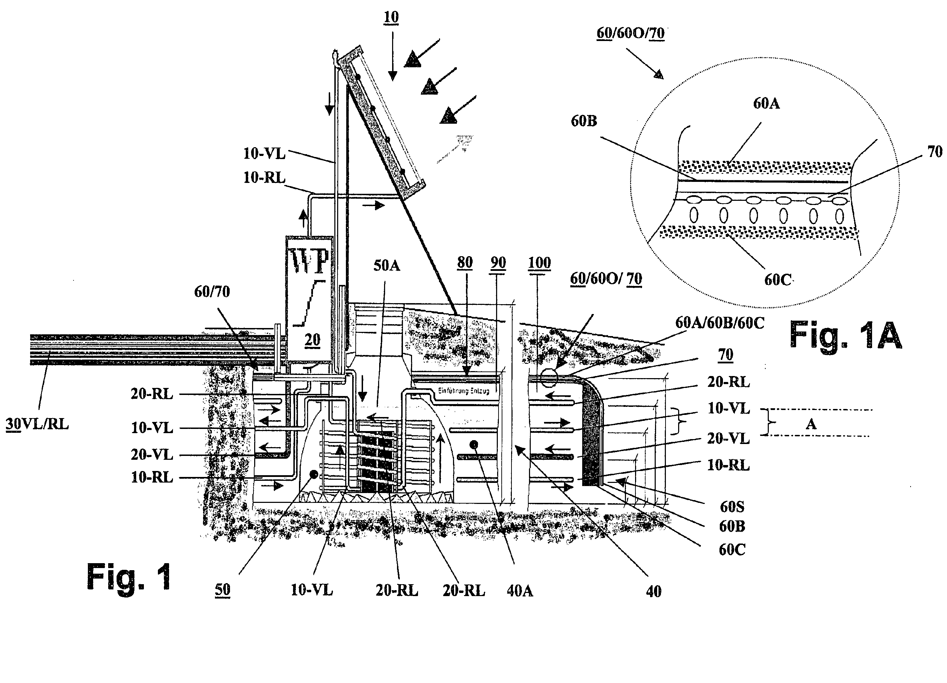

Die Figur 1 zeigt eine Hausenergiezentrale mit einer herausgezogenen Vergrößerung Figur 1A eines beispielhaften schichtenartigen Aufbaus in einem ersten Ausführungsbeispiel im oberen Bereich 60O.

Die Darstellung Figur 1 weist ein erstes System 10 zum Eintrag von Wärmeenergie auf. Ein zweites System 20 dient zur Entnahme von Wärmeenergie, wobei die Systeme 10, 20 mit ihrem jeweiligen die Wärme eintragenden und entnehmenden Teilsystemen in einen Klimaerdspeicher 80 integriert sind.

Der Klimaerdspeicher 80 kann unterhalb eines Hauses, wie im dargestellten Ausführungsbei- spiel auch im Erdkörper neben einem Haus oder auch als Hochbeet teils über/außerhalb des Erdkörpers angelegt werden. Im Zwischenraum der Beladeebene zur Entzugsebene ist genau die Menge Erdreich vorgesehen, die für den abgestimmten Wärmeübergang die optimale Speicherkapazität/-diffusität besitzt.

Das erste System zum Eintrag von Wärmeenergie in den Klimaerdspeicher 80 ist in Figur 1 beispielhaft als eine thermische Solaranlage 10 mit Vorlaufleitung 10VL und Rücklaufleitung 10RL dargestellt.

Das zweite System zur Entnahme von Wärmeenergie aus dem Klimaerdspeicher 80 ist hier beispielhaft eine Wärmepumpenanlage 20 mit einer Vorlauf-Soleleitung 20VL und einer Rücklauf-Soleleitung 20RL dargestellt. Die Solar-/ Soleleitungen 10VL, 10RL und 20VL, 20RL sind separat ausgeführte Systeme.

Über entsprechende Wärmetauscher nach dem Prinzip der bekannten Wärmepumpensysteme wird in der Wärmepumpenanlage 20 (nicht näher dargestellt) die entnommene Wärmenergie für einen Wärmeabnehmer, beispielsweise Heizung, optional Brauchwasser, nutzbar, wobei die Figur 1 prinzipiell einen Wärmestrang 30 mit Vorlauf/Rücklauf 30VL/30RL zeigt, der zu nicht näher dargestellten Wärmeabnehmern führt.

Der Klimaerdspeicher 80 ist beispielsweise aus natürlichen und/oder speziell für den Klimaerdspeicher 80 vorbereiteten, mit Zuschlagsstoffen (Salz, Lehm) versehenen Böden ausgeführt. Um ein möglichst gutes Wärmespeicherverhalten der Wärmespeichemasse des Klimaerdspeichers 80 zu ermöglichen, ist der Klimaerdspeicher 80 im oberen und im seitlichen Bereich mit einer Abdichtung 60 versehen.

Die Abdichtung 60 umfasst eine obere Abdichtung 60O und eine seitliche Abdichtung 60S, wobei im Bereich der oberen Abdichtung 600 ein Befeuchtungssystem 70 angeordnet ist.

Die Abdichtung 60 und das Befeuchtungssystem 70 weisen im oberen Bereich 600 des als Speicherraum 40 ausgebildeten Klimaerdspeichers 80 einen gemeinsamen schichtenartigen Aufbau auf.

Grundsätzlich besteht die Abdichtung 60O, 6OS mindestens aus der Dampfsperre 60B und dem zugehörige Befeuchtungssystem 70. Zumeist wird zusätzlich oben oder unten beziehungsweise seitlich innen oder außen zumindest eine weitere Funktionsschicht angeordnet, die wie vorne beschrieben verschiedene Funktionen übernehmen kann.

Nachfolgend wird eine in der Praxis mögliche Ausführung beschrieben, die jedoch die Erfindung hinsichtlich der Anordnung der Anzahl und des beschriebenen Schichtenaufbaus Dampfsperrschicht beziehungsweise der anordenbaren Funktionsschichten nicht einschränkt.

Eine erste, obere und eine dritte, untere, die obere Abdichtung 600 darstellende Funktionsschicht 6OA, 6OC ist in einer herausgezogenen, vergrößerten Darstellung der Figur 1A sichtbar gemacht.

Zwischen der ers en, oberen und dritten, unteren Funktionsschicht 60A, 60C liegt als eine zweite Schicht eine Dampfsperre 6OC, wobei immer unter dieser Dampfsperre 6OC das Befeuchtungssystem 70 ausgebildet ist.

In der Figur 1A and unterhalb des Befeuchtungssystems 70 symbolisch Wassertropfen als Fluid dargestellt, die zeigen, dass das Befeuchtungssystem 70 in einer Art Drainagesystem ausgebildet ist.

Die Abdichtung 60 im seitlichen Bereich 60S des als Speicherraum 40 ausgebildeten Klimaerdspeichers 80 weist ebenfalls vorzugsweise den schichtenartigen Aufbau auf, der aus einer ersten, äußeren einer dritten, inneren Abdichtung 6OA, 60C außen begrenzenden, Funktionsschicht ausgebildet ist.

Die Dampfsperre BOC ist eine dampf- und flüssigkeitsundurchlässige Schicht. Die jeweils erste und dritte Schutzschicht 6OA, 6OC als erste - obere/äußere - bzw. dritte - untere/innere - Schicht im oberen Bereich 60O sowie im seitlichen Bereich 60S der Abdichtung 60 ist beispielsweise als eine unverwitterbare Filzmatte als Schutz oder als eine Schutzdämmung und gleichzeitig eine Dehnfunktion übernehmenden Dämmplatten ausgebildet. Die Dämmplatten können die Ausdehnung des Klimaerdspeichers 80 bei thermischer Expansion des Volumens des Klimaerdspeichers 80 aufnehmen.

Die Funktionsschichten dienen der Begrenzung des Klimaerdspeichers 80 und stellen sicher das die Dampfsperre 60B hinsichtlich der Dampfdichtheit des Klimaerdspeichers 80 vor Zerstörungen bewahrt wird.

Die Funktionsschichten können zur Dämmung und Gewährleistung der Dehnung sowohl oben und/oder unten - obere Abdichtung 600 - als auch außen und/oder innen seitliche Abdichtung 60S angebracht sein.

Bei Betonbauteilen zur Abdichtung oder ähnlich starren Dampfhauben ist die Funktionsschicht zur Aufnahme von Dehnungen im Klimaerdspeicher 80 immer innen anzubringen und eine obere beziehungsweise äußere Funktionsschicht 6OA ist verzichtbar.

Die jeweilige erste und dritte Schutzschicht 6OA, 6OC dient dem Schutz der Folie gegenüber dem beidseitig anliegenden Erdreich, unter der Dampfsperre dem Drainagesystem 70.

Selbstverständlich ist grundsätzlich eine nur auf einer Seite ausgeführte begrenzende Schutzschicht 6OA oder 6OC denkbar, wobei prinzipiell sogar bereits das Auslegen einer Folie als Dampfsperre 60C ohne Funktionsschicht 6OA, 6OC ausreichend sein kann.

Erfindungsgemäß ist zur Ermittlung der Temperatur T und der absoluten oder relativen Feuchte p, ϕ in der fluidhaltigen Wärmespeichermasse des Klimaerdspeichers 80 zumindest ein Temperaturensensor 90 und zumindest ein Feuchtesensor 100 angeordnet, so dass die Speicherkapazität im Erdreich durch das Befeuchtungssystem 70 im gewünschten Betriebsbereich steuer- und regelbar und somit optimierbar ist. Schließlich helfen Wärmemengenmesser im ersten sowie zweiten im Klimaerdspeicher 80 befindlichen Teilsystem (nicht näher dargestellt) die Kennlinien des Speicherverhaltens zu erfassen.

Wie in der Figur 1 gezeigt, ist das im Klimaerdspeicher 80 liegende Teilsystem zum Eintrag der Wärmeenergie ein Erdregister und das im Klimaerdspeicher 80 liegende Teilsystem zur Entnahme von Wärmeenergie ebenfalls ein Erdregister Der Eintrag der Wärmeenergie erfolgt über die thermische Solaranlage 10 über den Vorlauf 10VL in den Klimaerdspeicher 80, wobei zunächst davon ausgegangen wird, dass ein Kontaktraum/Kontaktbehälter 50 nicht angeordnet ist.

Über die in einem bestimmten Abstand A im Klimaerdspeicher 80 beispielsweise verlegten Registedeitungen wird über den Vorlauf 10VL der thermischen Solaranlage 10 Wärmeenergie im Klimaerdspeicher 80 gespeichert und nach Abgabe der Wärmeenergie über den Rücklauf 10RL das abgekühlte Trägermedium der Wärme der thermischen Solaranlage, insbesondere dem dargestellten Kollektor, zur erneuten Erwärmung zugeführt.

Dieser Wärmeeintrag erfolgt selbstverständlich nur dann, wenn über die Quelle, hier Sonnenenergie, ein entsprechender Wärmeeintrag zur Verfügung steht.

Aus der beispielhaft dargestellte Wärmepumpenanlage 20 wird über den Vorlauf 20VL kalte Sole c er Wärmepumpenanlage 20 ebenfalls schichtenartig in einem bestimmten Abstand A durch den Klimaerdspeicher 80 geführt.

Eine bestimmte Wärmemenge wird dem Klimaerdspeicher 80 entzogen, über den Vor- und Rücklauf 20VL, 20RL sowie nach dem Verdichter-/Entspannerprinzip an den als Verbraucher gekennzeichneten Wärmestrang 30VL/30RL abgeführt.

Zur Entnahme von Wärmeenergie kann das zweite System 20 nicht nur als horizontal verlegte, schichtenartige Erdregister, sondern auch als vertikal angeordnete Erdsonde oder mehrerer vertikal angeordneter Erdsonden ausgeführt werden. Hier erfolgt dann eine vertikale Anordnung von mehreren Erdsonden im Klimaerd speicher 80, wobei hier ebenfalls ein gewisser Abstand (nicht näher dargestellt) vorgebbar ist.

Der Einsatz eines Systemstrahlungselementes zur Zuführung von Wärme in den Klimaerdspeicher 80 ist in Kombination oder alleine mit Erdsonden und/oder Erdregistern wie beschrieben (nicht dargestellt) ebenfalls denkbar.

In Abhängigkeit der Eigenschaften des Erdreiches sind für derartige Anlagen, bei denen die Wärmemenge durch das zweite System 20 mittels Erdsonden oder Erdkollektoren dem Erdreich des Klimaerdspeichers 80 entzogen wird, folgende Leistungen zu erwarten. In Abhängigkeit des Wassergehaltes im Erdreich wird bei spieralförmigen Erdsonden eine maximale Entzugsleistung von circa 100 - 150 W/m (Sondenlänge) erreicht. Bei sehr trockenen Böden sinkt die Entzugsleistung auf maximal circa 50 W/m.

Für herkömmliche Erdkollektoren gelten Entzugsleistungen von circa 40 - 65 W/m² bei feuchtem bis lehmig/sandigem Erdreich. Bei ungünstigen Verhältnissen, beispielsweise bei steinig- trockenem Erdreich, sinkt die maximale Entzugsleistung auf circa 20 - 32 VJ/m².

Aus diesen Daten wird deutlich, dass sowohl beim Einsatz von Erdsonden in vertikaler Anordnung in einem vorgebbaren Abstand als auch beim Einsatz von Erdkollektoren in horizontaler schichtenartiger Anordnung in einem vorgebbaren Abstand die Entzugsleistung bei trockenem Boden bzw. Erdreich wesentlich absinkt. Wünschenswert ist also die Fähigkeit, die Wärme im Erdreich durch Optimierung des Verhältnisses von festen und in Form von Wasser in flüssigem Zustand vorliegenden Bestandteilen zu optimieren, dabei soll sowohl Wasser als auch Dampf als Speichermedium in dem aus Erdreich ausgebildeten Klimaerdspeicher 80 dienen.

In Abhängigkeit der jeweils im Klimaerdspeicher 80 erzeugten, örtlich differierenden Temperaturen kommt es zu einer Dampfdruckerhöhungl-senkung im Klimaerdspeicher 80 und damit zu den gewünschten Phasenumwandlungen, so dass Teile der Flüssigheit verdampfen/kondensieren/adsorbieren.

Die Dimensionen der Hausenergiezentrale sind so bemessen, dass erreichbare Be- und Entladezyklen optimal genutzt werden. Bestimmend hierfür ist das Verhalten des im Boden vorhandenen Wassers. Bei der Beladung erfolgt im Bereich der Übergänge aus verschiedensten Solar- oder Prozesswärmequellen die Erhöhung der Dampfkonzentration. Das Wasser im Kontakt oder mittelbarer Nähe nimmt die zum temperaturbedingten Dampfkonzentrationsausgleich erforderliche Verdampfungswärme aus der jeweiligen Beladungsebene auf.

Damit diese latente Verdampfungswärme innerhalb des Klimaerdspeichers 80 für Speicherzwecke n cht verloren geht und nicht in die Atmosphäre aufsteigt, wird die zuvor beschriebene Abdichtung 60 als obere Abdichtung und die seitliche Abdichtung 60S wie beschrieben ausgeführt.

Die latente Verdampfungswärme wird neben der im flüssigen Zustand im Wasser/Gestein gespeicherten sensiblen Wärme wie unter einer Glocke innerhalb der Dampfsperre 6OC im Klimaerdspeicher 80 zurückgehalten.

Die Abkühlung oder Entnahme von Wärmeenergie durch das im Klimaerdspeicher 80 verlaufende zweite System 20 bewirkt eine Kondensation des Dampfes bis hin zur Gefrierung der wässrigen Phase.

Wie in der Atmosphäre kommt es in aufliegenden, kühleren Schichten zur Kondensation/Adsorption des zuvor verdampften, aufgestiegenen Wassers. An den spiralförmigen Erdwärmesonden bzw. Erdwärmeregistem fallen die Wassertropfen aus und sickern dann unter der Glocke durch das Erdreich des Klimaerdspeichers 80 nach unten in Richtung der einzelnen Be- und Entladeebenen.

Der Verlust des Wassers, kann zudem, durch die ständige Zuführung von Wärmeenergie hervorgerufen, wie bereits beschrieben bis hin zur Austrocknung des Erdwärmespeichers 80 führen. Durch die Befeuchtung wird die Regeneration des Erdwärmespeichers 80 bewirkt.

Für das Befeuchtungssystem 70 kommt bei Unterschreitung eines definierten, kritischen Feuchtegehaltes und/oder Überschreitung einer definierten kritischen Temperatur im Erdwärmespeicher 80 die Zuführung von Wasser aus einem Brauch-/Regenwasserreservoir (nicht dargestellt) zur Anwendung. Bemessen auf die Speicherfläche werden beispielsweise bis 2,5 l/m² der Speicheroberfläche des Klimaerdspeichers 80 und Tag In das Speichermedium verteilt.

Beachtlich hierbei ist, dass 1 I Fluid, insbesondere Wasser, circa 0.628 kWh an Verdampfungswärme aufnimmt und demnach relativ geringe Mengen für eine optimale Dosierung bereitgestellt werden müssen.

Das vorhandene gekoppelte System aus Abdichtung 60 und Befeuchtungssystem 70 dient also zum Einen zur Rückhaltung, der über das erste System (thermische Solaranlage) 10 zugeführten Wärmeenergie innerhalb des Klimaerdspeichers 80 und zum Anderen zur Optimierung des Wassergehaltes (Feuchte) innerhalb des Klimaerdspeichers 80. Eine Art Nasskies ähnlich der Aquifer-Speicher darf bei der Befeuchtung im Klimaerdspeicher 80 jedoch nicht entstehen. Dies ist durch die Temperatur- und F euchtemessung 90, 100 gewährleistet.

Das Befeuchtungssystem 70 kann dabei auch zur erstmaligen Befeuchtung des als Klimaerdspeicher 80 errichteten Speicherkörpers verwendet werden. Später dient das Befeuchtungssystem 70 stets nur noch der Wiederherstellung/Einstellung des ursprünglich in einen optimalen Bereich geführten Klimaerdspeichers 80.

Die Leistungsfähigkeit des Speichers wie auch der Wirkungsgrad einer Wärmepumpe hängt ganzerheblich von günstigen Arbeitsbereichen ab, die eine geringe Schwankungsbrehe haben sollen. Allein die Schwankungen der Wärmeversorgung zwischen Tag unc Nacht können bei solarthermischen Anlagen einen Leistungsverlust von ca. 30 % berechnet auf den saisonalen Ertrag ausmachen.

Erforderlich ist somit, dass der Wärmeeintrag bzw. Wärmeentzug mit einer möglichst geringen Schwankungsbreite innerhalb der optimalen Temperaturen und des günstigen Wassergehaltes im Klimaerdspeicher 80 erfolgt. Ungünstig ist eine starke Entnahme von Wärme durch das zweite System 20 ohne gleichzeitige Zuführung von Wärme durch das erste System 10 beziehungsweise eine ständige Zuführung von Wärme durch das erste System 10 ohne entsprechende Abnahme von Wärme durch das zweite System 20.

Da sowohl der Ar fall von Wärmeenergie über das erste System 10 beziehungsweise die notwendige Abnahme von Wärme durch das zweite System 20 nicht immer korrespondiert, kann die Leistungsfähigkeit des Klimaerdspeichers 80 somit der Wirkungsgrad der Wärmepumpe und ebenfalls der gesamten Hausenergiezentrale dadurch verbessert beziehungsweise der Wirkungsgrad erhöht werden, indem im Klimaerdspeicher 80 ein Kontaktraum 50 beziehungsweise, wie in der Figur 1 dargestellt, ein Kontaktbehälter 50 angeordnet wird. Dieser Kontaktbehälter 50 ist mit einem Fluid, vorzugsweise Wasser, befüllt, welches eine hohe spezifische Wärmekapazität aufweist, wobei die Leitungen zur Wärmezuführung beziehungsweise Wärmeabführung des jeweiligen sich im Klimaerdspeicher 80 befindenden Teilsystems des ersten und zweiten Systems 10, 20 durch den Kontaktbehälter 50 geführt werden.

Diese Maßnahme führt dazu, dass Energie im Vorlauf 10VL aus dem ersten System 10 zum Wärmeintrag wegen des mehrfach besseren Übergangs zunächst im Puffer 50 verbleibt.

Hierdurch wird folglich auch ein äquivalent höheres Energieniveau in der Sole des Wärmepumpenssystems des Rücklaufes 20RL des zweiten Systems 20 zur Entnahme von Wärmenergie erreicht.

Der Kontaktbehälter 50 weist einen bestimmten vorgebbaren korrigierbaren Füllstand 50A auf, wobei das jeweilige Volumen des Kontaktbehälters 50 die zwischenspeiche bare Wärmemenge bestimmt.

Wie dargestellt ist der Vorlauf 10VL der thermischen Solaranlage 10 über den Kontaktbehälter 50 geführt, in dem zunächst die entsprechende Wärme an das Wasser im Kontaktbehälter 50 abgegeben wird, wonach der Vorlauf 10VL schichtenartig - von oben nach unten - durch den Klimaerdspeicher 80 geführt wird, wo die Restwärme, des in der thermischen Solaranlage 10 sich im Kreislauf befindenden über den Rücklauf 10RL zurückgeführten Mediums abgegeben wird.

Zuerst ist der Vorlauf 20VL des zweiten Systems 20 schichtenartig in einer Art Erdregister - von unten nach oben - durch den Klimaerdspeicher 80 geführt, um die so gegebenenfal s unter 0°C abgekühlte Sole aus der Wärmepumpe 20 vorzuwärmen. Der Rücklauf 20RL der Wärmepumpenanlage 20 wird nach dem Entzug der Wärme aus dem Klimaerdspeicher 80 oben in den Kontaktbehälter 50 geführt. Das günstigste Soletemperaturniveau ist durch Temperaturbegrenzung einzustellen. Die Wärme ist im Kontaktbehälter 50 effektiver als im Klimaerdspeicher 80 selbst aufnehmbar. Die Wärmepumpe 20 gibt dann entsprechend der Funktion die Wärme, die sich durch die Temperaturdifferenz AT der Sole anleitet, an den Wärmestrang 30VL/RL, umgesetzt in das dort angeforderte Temperaturniveau, ab.

Vorzugsweise werden der Vorlauf 10VL des Teilsystems innerhalb des Klimaerdspeichers beziehungsweise des Kontraktraumes 50 zum Eintrag der Wärmeenergie und der Rücklauf 20RL des Teilsystems zur Entnahme der Wärmeenergie gegenläufig aneinander vorbeigeführt. Gleichläufige Leitungsführung ist selbstverständlich ebenfalls denkbar. Droht die Kontaktflüssigkeit im Kontaktbehälter 50 ohne Nachladung von Wärme aus dem ersten System 10 bei dauernder Sole-Rücklauftemperatur 20RL unter 0°C einzufrieren wird der Kontaktbehälter 50 entleert.

Durch den Kontaktbehälter 50 werden Zeiten statistisch höherer Wärmeanforderung denen niedrigerer Wärmeanforderung ins Verhältnis gebracht. Eine ungünstige Temperaturspreizung im Klimaerdspeicher 80 wird vermieden.

Die Systeme 10 und 29 zum Wärmeeintrag und zum Wärmeentzug in beziehungsweise aus dem Erdspeicher 80 können entsprechend geringer bemessen, die Trägheit des Bodens bei der Beladung beziehungsweise Entladung der Wärmeenergie können somit überwunden werden.

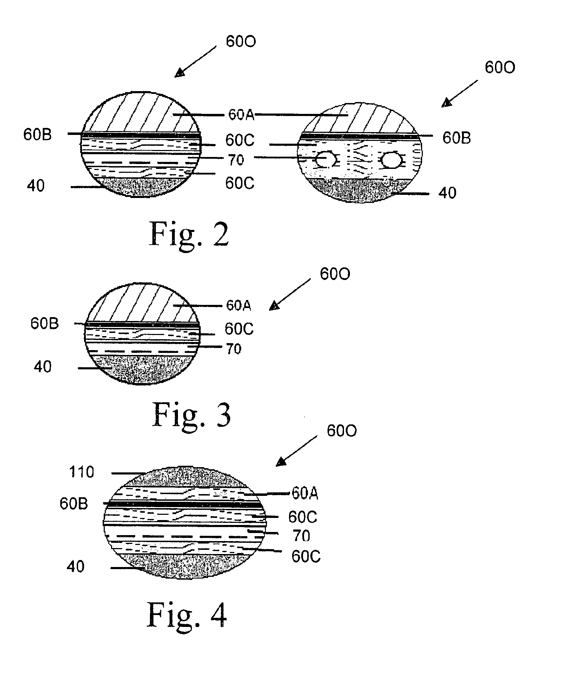

Schließlich zeigt Figur 2 ein weiteres Ausführungsbeispiel. Oberhalb des Speicherraumes 40 ist beispielsweise bereits ein Baukörper angeordnet, der als erste, obere Funktionsschicht 60A bereits den oberen Schutz der Dampfsperre 6OB übernehmen kann.

Die Funktion der oberen begrenzenden Funktionsschicht 6OA kann also von einem Bauteil des Baukörpers bereits erfüllt sein. Konventionell errichtete Bodenplatten mit darunter befindlichen, kapillarbrechenden Splitt-, Schotter-, Recyclingschichten erfordern jedoch ensgesamt den folgenden schematisch, dargestellten Aufbau der oberen Abdichtung 600.

Die erste, obere Funktionsschicht 6OA als Schutzschicht der Dampfsperre 6OB bildet die Platte des Baukörpers. Danach schließt sich die Dampfsperre als zweite Schicht 6OB an, die von einer Funktionsschicht 6OC, vorzugsweise eine Filzmatte oder dergleichen, unterfüttert ist. Unterhalb beziehungsweise in die Filzmatte 6OC hinein wird das Befeuchtungssystem 70 angeordnet.

Das Befeuchtungssystem 70 ist wiederum von unten mit einer Funktionsschicht 60C, vorzugs- weise einer Filzmatte, zum Schutz des Befeuchtungssystems 70, zum Speicherraum 40 des Klimaerdspeichers 80 hin, begrenzt.

Gemäß Figur 3, die einem dritten Ausführungsbeispiel entspricht, entfällt in Klimaerdspeicherr 80, bei denen im Speicherraum sandige Böden zum Einsatz kommen die dritte untere Funktionsschicht 6OC. Die Drainageleitungen des Befeuchtungssystems 70 im Klimaerdspeicher 80 können gemäß Figur 3 direkt in das Erdreich des Speicherraums 40 verlegt werden.

Figur 4 zeigt ein viertes Ausführungsbeispiel, welches den Schichtenaufbau insbesondere in Freiflächen darstellt. Die hier dargestellte obere Abdichtung 600 für den Aufbau des Klimaerd- Speichers 80 in Freiflächen, also nicht unterhalb eines Baukörpers weist folgende Schichten auf.

Als erste Schicht 10 wird Erdreich 1 10 aufgebracht, wobei darunter zunächst als erste, obere Funktionsschicht 6OA eine Filzmatte und unterhalb dieser Filzmatte die Folie als zweite Schicht 6OB angeordnet wird. Als Schutz der Dampfsperre 60B gegenüber dem Befeuchtungssystem 70 wird wiederum eine dritte Funktionsschicht 60B oberhalb des Befeuchtungssystems 70 verlegt. Das Befeuchtungssystem 70 wiederum erhalt als Schutz wiederum nochmals eine Funktionsschicht, die der dritten Funktionsschicht 6OC entspricht und wiederum eine Filzmatte ist.

Die unterhalb der Dampfsperre 6OB angeordnete Filzmatte 60C kann vorzugsweise auch um Schulz- und Dämmeigenschaften sowie Dehnungseigenschaften zu verwirklichen eine Dämmplatte sein, so dass dann Schutz und Dämmung gegen Wärmeverluste des Erdwärmespeichers abgesichert beziehungsweise verhindert und Dehnung des Klimaerdspeichers 80 aufgenommen werden kann.

Geringe Einbautiefen/Hochbeete sowie unerwünscht Wärme leitende Decklagen erfordern die in der Figur 4 über dem Befeuchtungssystems 70 zur Dampfsperre 6OB ausgebildete untere Funktionsschicht als Schutzschicht 6OC ebenfalls als Dämmplatte auszuführen.

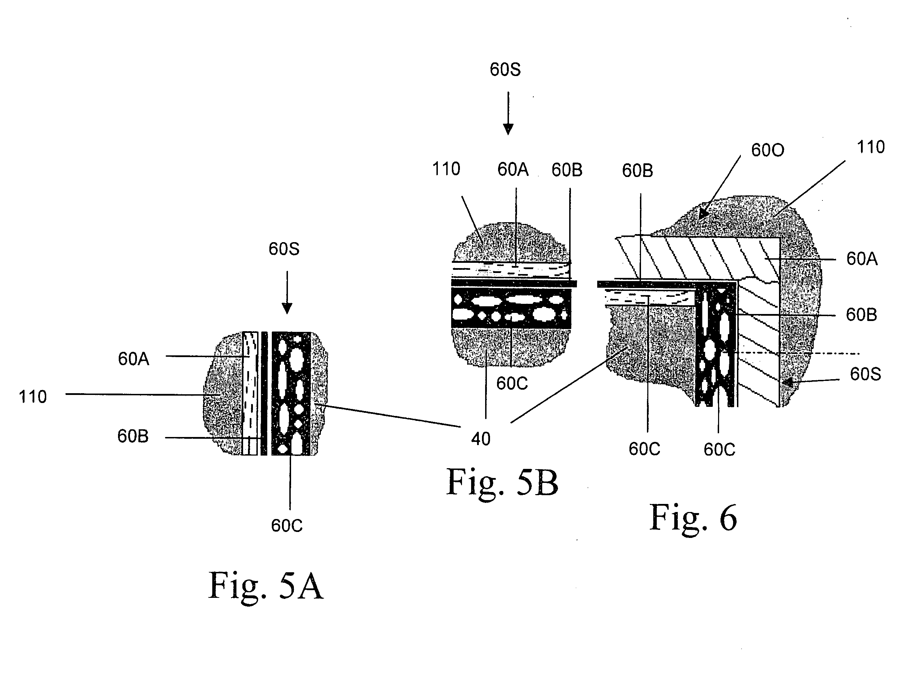

Die Figuren 5A und 5B zeigen eine vergrößerte, schematische Schnittdarstellung in einer vertikal geschnittenen seitlichen Abdeckung (Figur 5A) und in einer horizontal geschnittenen seitlichen Abdeckung (Figur 5B) in der jeweils gleichen Schichtenfolge. Als erste, äußere Funktionsschicht 60A wird im seitlichen Bereich eine Schutzschicht, beispielsweise wiederum eine Filzmatte, für die Folie 60B als zweite Schicht angeordnet.

Im inneren, seitlichen Bereich des Klimaerdspeichers 80 wird als dritte, innere Funktionsschicht 6OC vorzugsweise eine Dämmplatte angebracht, die sowohl eine Schutzfunktion, als auch eine Dämmfunktion und eine Dehnfunktion zum Ausgleich von Dehnungen des Klimaerdspeichers 80 ermöglicht.

Figur 5B zeigt dies e gleiche Ausführung in der horizontal geschnittenen Darstellung.

In der Darstellung Figur 6 wird in einem sechsten Ausführungsbeispiel eine Variante vorgestelt, bei der insbesondere der Übergang zwischen der oberen Abdichtung 600 und der seitlichen Abdeckung 60S von Interesse ist. Die obere Abdichtung 600 liegt beispielsweise wiederum unter einer ersten Funktionsschicht 60A als Bodenplatte, die bereits den oberen Schutz der zweiten Schicht 6OB, der Folie, übernimmt.

Unterhalb der Folie 60B ist als dritte Funktionsschicht innerhalb der oberen Abdichtung 600 eine Filzmatte 6OC angeordnet.

Zur seitlichen Abd chtung 60S hin wird die Folie 6OB neben dem Seitenstreifenfundament, welches als erste, äußere Funktionsschicht seitlichen Bereich des Klimaerdspeichers 80 ausgebildet ist, in den seitlichen Abdichtungsbereich 60S herumgezogen.

Hier im seitlichen Bereich 6OS wird als dritte, innere Funktionsschicht eine Dämmplatte 6OC ausgeführt, die im Bereich der oberen Abdichtung 60O an der Filzmatte 60C anliegt. Die zweite Schicht 6OB als Dampfsperre, beispielsweise die Folie, endet jedoch nach Umlegen in den seitlichen Bereich hinein, wie dargestellt.

Die seitliche Abdichtung 60S als Dampfsperre wird im sechsten Ausführungsbeispiel somit nur durch das aus vorzugsweise wasserundurchlässigem Beton ausgeführte Seitenstreifenfundament als erste, äußere Funktionsschicht 60A und als die dritte, inne e Funktionsschicht angeordnete Dämmschicht 6OC, die selbst ebenfalls möglichst wasserundurchlässig ausgeführt ist, realisiert. Eine weiter im Bereich der seitlichen Abdichtung 60S heruntergezogene Dampfsperre 60B kann hier entfallen.

### Bezugszeichenliste

- 10: System zum Wärmeeintrag [thermische Solaranlage/ Kühlabsorber Photovoltalk o.a.] 10VL Vorlauf Wärmeeintragssystem [thermische Solaranlage]
- 10RL: Rücklauf Wärmeeintragssystem [thermische Solaranlage]
- 20: System zur Wärmeentnahme [Wärmepumpenanlage]
- 20VL: Vorlauf Wärmeentnahmesystem [Sole - WP]
- 20RL: Rücklauf Wärmeentnahmesystem [Sole - WP] 30VL/RL Wärmestrang (Heizung, optional Brauchwasser)
- 40: Speicherraum
- 40A: Zwischenraum Be-/ Entlade beziehungsweise Entzugsebenen
- 50: Kontaktbehälter/Kontaktstrecke
- 5OA: Füllstand Kontaktbehälter 60 Abdichtung
- 600: obere Abdichtung
- 6OS: seitliche Abdichtung
- 6OA: erste Funktionsschicht [obere Funktionsschicht oder seitliche, äußere Funktionsschicht] 6OB zweite Schicht [Folie oder Beton als Dampf- sperre]
- 6OC: dritte Funktionsschicht [untere Funktionsschicht oder seitliche, innere Funktionsschicht]
- 70: Befeuchtungssystem
- 80: Klimaerdspeicher 90 Temperatursensor
- 100: Feuchtesensor
- 110: Erdreich außerhalb Klimaerdspeicher
- A: Abstand

## Patentansprüche

1. Klimaerdspeicher für eine Hausenergienutzung mit einem Befeuchtungssystem (70), der aus einer ungesättigten, fluidhaltigen Wärmespeichermasse ausgebildet ist, der mindestens ein erstes Teilsystem zum Eintrag und in definierter Entfernung mindestens ein zweites Teilsystem zur Entnahme von Wärmeenergie enthält,
wobei die Systeme mit ihrem jeweiligen die Wärme eintragenden und entnehmenden Teilsystemenen einem den Klimaerdspeicher ausbildenden, nach unten offene, teilweise gasdicht ausgeführten Speicherraum angeordnet werden, **dadurch gekennzeichnet, dass** zumindest eine glockenartige obere und eine umlaufende seitliche gasdichte Abdichtung (60O, 60S) des Speicherraumes (40) des Klimaerdspeichers (80) erfolgt, so dass dem das ungesättigte Fluid beinhaltende Speichermedium des Klimaerdspeichers (80) durch das mindestens eine erste System Wärme (10) zuführbar ist, die innerhalb des Klimaerdspeichers (80) bei im Wesentlichen gleichbleibenden normalen Luftdruck zur Erwärmung der Wärmespeichermasse und des Fluids und zu einer Verdampfung des Fluids führt, wodurch über die jeweilige spezifische Wärmekapazität/Verdampfungsenthalpie des flüssigen und gasförmigen Fluids eine Wärmemenge im Klimaerdspeicher (80) innerhalb des glockenartigen Abdichtung (60O, 60S) speicherbar ist, die über das mindestens eine zweite System (20) unter Kondensation des Fluids und unter Abkühlung der W ärmespeichermasse des Klimaerdspeichers (80) und des im Klimaerdspeicher (80) vorhandenen Fluids (80) zur Nutzung der Wärme in einer Hausenergiezentrale entnommen wird, wobei das Befeuchtungssystem (70) zumindest im Bereich unter der oberen Abdichtung (60O) angeordnet ist.

2. Klimaerdspeicher nach Anspruch 1 , **dadurch gekennzeichnet, dass** die obere und die umlaufende seitliche Abdichtung (60O, 60S) als Mindestanforderung eine Dampfsperre (60B) ist, die
• aus einer wasser- und dampfdichten Folie oder
• einem wasserundurchlässigen Beton oder
• aus Betonplatten mit verklebten oder verschweißten wasserdichten und dampfdichten Kunststoff-/Dämmtafeln oder dergleichen
ausgebildet ist.

3. Klimaerdspeicher nach Anspruch 1 , **dadurch gekennzeichnet, dass** der Dampfsperre (60B)
als obere Abdichtung (600) eine erste, obere und/oder dritte, untere Funktionsschicht (6OA, 60C) und
als seitliche Abdichtung (60S) eine erste, äußere und/oder dritte, innere Funktionsschicht (6OA, 6OC)
zuordenbar ist.

4. Klimaerdspeicher nach Anspruch 3, **dadurch gekennzeichnet, dass** die jeweilige erste und/oder dritte Funktionsschicht (6OA, 60C) als Schutzschicht und/oder Dämmschicht und/oder Dehnschicht und/oder Dränageschicht ausgebildet ist.

5. Klimaerdspeicher nach Anspruch 1 bis 4, **dadurch gekennzeichnet, dass** die Abdichtung (60) im oberen Bereich (60O), des als Speicherraum (40) ausgebildeten Erdwärmespeichers (80) einen gemeinsamen, schichtenartigen Aufbau aufweist, der aus der ersten, oberen und der dritten, unteren, die zweite, mittlere Dampfsperrschicht (60B) und das Befeuchtungssystem (70) jeweils begrenzende Funktionsschicht (6OA, 60C) ausgebildet ist.

6. Klimaerdspeicher nach Anspruch 1 , **dadurch gekennzeichnet, dass** die Abdichtung (60) im umlaufenden, seitlichen Bereich (60S), des als Speicherraum (40) ausgebildeten Klimaerdspeichers (80) einen gemeinsamen schichtenartigen Aufbau aufweist, der aus einer ersten, äußeren und einer dritten, inneren, die zweite, mittlere Dampfsperrschicht (60B) begrenzenden Funktionsschicht (6OA,
60C) ausgebildet ist.

7. Klimaerdspeicher nach einem der Ansprüche 4 bis 6, **dadurch gekennzeichnet, dass** die erste und/oder dritte Funktionsschicht als Schutz- und/oder Dehnungs- und/oder Dämmungs- und/oder Drainageschicht (6OA, 6OC) unverwitterbare Filzmatten oder dauerelastische Dämmplatten oder dergleichen verwendet werden.

8. Klimaerdspeicher nach Anspruch 1 , **dadurch gekennzeichnet, dass** das Befeuchtungssystem (70) im Klimaerdspeicher (80) als schichtenartige Leitungsanordnung als eine Art Drainage ausgeführt ist.

9. Klimaerdspeicher nach Anspruch 1 , **dadurch gekennzeichnet, dass** zur Ermittlung der Temperatur (T) und der absoluten und/oder relativen Feuchte (p, ϕ ) des optimalen Bereiches des Wärmespeichervermögen der fluidhaltigen Wärmespeichermasse des Klimaerdspeichers (80) zumindest ein Temperatursensor (90) und zumindest ein Feuchtesensor (100) angeordnet ist, so dass die Konzentration des Fluids im Boden durch das Befeuchtungssystem (70) im gewünschten Betriebsbereich steuer- und regelbar und somit optimierbar ist.

10. Klimaerdspeicher nach Anspruch 1 , **dadurch gekennzeichnet, dass** das mindestens eine erste System (10) mit seinem außerhalb des Klimaerdspeichers (80) liegenden Teilsystems des erstens Systems (10) zum Eintrag von Wärmeenergie in den Klimaerdspeicher (80) eine thermische Solaranlage oder ein Photovoltaik-Kühlabsorber ein System auf Basis auskoppelbarer Prozesswärme anderer Systeme und/oder eine konventionelle Wärmeerzeugeranlage oder eine Energieversorgung für das Systemstrahlungselement ist.

11. Verfahren zum Steuern und Regeln eines Klimaerdspelchers für die Hausenergienutzung mit einem Befeuchtungssystem (70), der aus einer ungesättigten fluidhaltigen Wärmespeichermasse ausgebildet ist, der mindestens ein erstes Teilsystem zum Eintrag und in definierter Entfernung mindestens ein zweites Teilsystem zur Entnahme von Wärmeenergie
enthält, wobei die Systeme mit ihrem jeweiligen die Wärme eintragenden und entnehmenden Teilsystemen in einem den Klimaerdspeicher ausbildenden, nach unten offenen, teilweise gasdicht ausgeführten Speicherraum angeordnet werden, **dadurch gekennzeichnet, dass** der das ungesättigte Fluid beinhaltenden Wärmespeichermasse des Klimaerdspeichers (80) durch das mindestens eine erste System Wärme (10) zugeführt wird, die innerhalb des Klimaerdspeichers (80) bei im Wesentlichen gleichbleibenden normalen Luftdruck zur Erwärmung der Wärmespeichermasse ur d des Fluids und zu einer Verdampfung des Fluids führt, wodurch über die jeweilige spezifische Wärmekapazität/Verdampfungsenthalpie des flüssigen und gasförmigen Fluids eine Wärmemenge im Erdwärmespeicher speicherbar ist, die über das mindestens eine zweite System (20) unter Kondensation des Fluids und unter Abkühlung der Wärmespeichermasse des Erdwärmespeicher (80) und des im Erdwärmespeicher vorhandenen Fluids (80) zur Nutzung der Wärme in einer Hausenergiezentrale entnommen wird, wobei das Wärmespeichervermögen der Wärmespeichermasse des Erdwärmespeichers (80) gesteuert und geregelt wird, indem dem Erdwärmespeicher (80) über das Befeuchtungssystem (70), welches zumindest im Bereich unter der oberen Abdichtung (60O) angeordnet ist. Fluid zugeführt wird.

12. Verfahren nach Anspruch 11 **dadurch gekennzeichnet, dass** die Kondensation des Fluids automatisch zu einer Rückbefeuchtung des Klimaerdspeichers (80) führt.

13. Verfahren nach Anspruch 11, **dadurch gekennzeichnet, dass** der gleichzeitige Wärmeeintrag und Wärmeentzug zur einer schichtenweisen Erhöhung oder Verringerung cer Temperatur der Wärmespeichermasse und des Fluids und über die sich einsteilende Temperatur- /Dampfdruckdifferenz in den Schichten zur Verdampfung oder Kondensation des im Klimaerdspeicher (80) vorhandenen Fluids von unten nach oben führt, umgekehrt sich am zwei-ten Teilsystem (20) kondensiertes Fluid über die sich mit abnehmender Temperatur relativ zum Dampfdruck verstärkende Adsorbtionswirkung gleichmäßig auf den Oberflächen der festen Bestandteile der Wärmespeichermasse verteilt, wieder in die Nähe zum ersten Teilsystem (10) zum Wärmeeintrag gelangt, wo sich der beschriebene Vorgang wiederholt.

14. Verfahren nach Anspruch 11, **dadurch gekennzeichnet, dass** im Klimaerdspeicher (80) eine absolute und/oder relative Feuchte (p, ϕ ) und eine Temperatur (T) der Wärmespeichermasse des Klimaerdspeichers (80) gemessen wird.

15. Verfahren nach den Ansprüchen 11, **dadurch gekennzeichnet, dass** mit der Verdampfung des Fluids beziehungsweise des Konzentrationsrückgangs des Haftwassers abstrakt ein für die Rückbefeuchtung bereites System zur Aufnahme des sich durch Abgabe von Verdampfungswärme bildenden Kondensats geschaffen wird.

## Claims

1. Geothermal energy accumulator for domestic power use with a humidifier system (70), which is configured from an unsaturated fluid-containing heat storage medium, which contains at least one first part-system for the input of thermal energy and at a defined distance at least one second part-system for the removal of thermal energy, wherein the systems with their respective part-systems supplying and removing the heat are arranged in a downwardly open, partially gastight storage space, which forms the geothermal energy accumulator, **characterised in that** at least one bell-like upper seal and a circumferential lateral gastight seal (600, 60S) of the storage space (40) of the geothermal energy accumulator (80) occurs, so that heat (10) can be supplied to the storage medium of the geothermal energy accumulator (80) containing the unsaturated fluid by means of the at least one first system, said heat causing the heat storage medium and the fluid to heat up and the fluid to vaporise inside the geothermal energy accumulator (80) at substantially constant normal air pressure, as a result of which by way of the respective specific heat capacity/vaporisation enthalpy of the liquid and gaseous fluid a quantity of heat can be stored in the geothermal energy accumulator (80) within the bell-like seal (600, 60S) and said amount of heat is removed by means of the at least one second system (20) with condensation of the fluid and cooling of the heat storage medium of the geothermal energy accumulator (80) and the fluid (80) present in the geothermal energy accumulator (80) for use of the heat in a domestic power plant, wherein the humidifier system (70) is arranged at least in the region below the upper seal (600).

2. Geothermal energy accumulator according to claim 1, **characterised in that** the upper seal and the circumferential lateral seal (600, 60S) is a vapour barrier (60B) as minimum requirement, which
• is made from a water- and vapour-tight film or
• a water-impermeable concrete or
• composed of concrete slabs with glued or welded watertight and vapour-tight plastic/insulation boards or the like.

3. Geothermal energy accumulator according to claim 1, **characterised in that** the vapour barrier (60B)
can be assigned a first upper and/or third lower function layer (60A, 60C) as upper seal (600) and
a first outer and/or third inner function layer (60A, 60C) as lateral seal (60S).

4. Geothermal energy accumulator according to claim 3, **characterised in that** the respective first and/or third function layer (60A, 60C) is configured as a protective layer and/or insulation layer and/or expansion layer and/or drainage layer.

5. Geothermal energy accumulator according to claims 1 to 4, **characterised in that** in the upper region (600) of the geothermal energy accumulator (80) configured as storage area (40) the seal (60) has a common layer-like structure, which is composed of the first upper and the third lower function layer (60A, 60C) respectively delimiting the second middle vapour blocking layer (60B) and the humidifier system (70).

6. Geothermal energy accumulator according to claim 1, **characterised in that** in the circumferential lateral region (60S) of the geothermal energy accumulator (80) configured as storage space (40) the seal (60) has a common layer-like structure, which is composed of a first outer and a third inner function layer (60A, 60C) delimiting the second middle vapour blocking layer (60B).

7. Geothermal energy accumulator according to one of claims 4 to 6, **characterised in that** weather-resistant felt mats or permanently elastic insulation boards or the like are used [for?] the first and/or third function layer as a protective and/or expansion and/or insulation and/or drainage layer (60A, 60C).

8. Geothermal energy accumulator according to claim 1, **characterised in that** the humidifier system (70) in the geothermal energy accumulator (80) is configured as a layer-like pipe arrangement as a type of drainage.

9. Geothermal energy accumulator according to claim 1, **characterised in that** at least one temperature sensor (90) and at least one humidity sensor (100) are provided for determination of the temperature (T) and the absolute and/or relative humidity (p, ϕ) of the optimum range of the thermal storage capacity of the fluid-containing heat storage medium of the geothermal energy accumulator (80), so that the concentration of the fluid in the ground can be controlled and regulated, and thus optimised, by the humidifier system (70) in the desired operating area.

10. Geothermal energy accumulator according to claim 1, **characterised in that** the at least one first system (10) with its part-system of the first system (10) lying outside the geothermal energy accumulator (80) for the input of thermal energy into the geothermal energy accumulator (80) is a thermal solar power plant or a photovoltaic cooling absorber, a system based on process heat that can be decoupled from other systems and/or a conventional heat generation system or a power supply for the system radiation element.

11. Method for controlling and regulating a geothermal energy accumulator for domestic power use with a humidifier system (70), which is configured from an unsaturated fluid-containing heat storage medium, which contains at least one first part-system for the input of thermal energy and at a defined distance at least one second part-system for the removal of thermal energy, wherein the systems with their respective part-systems supplying and removing the heat are arranged in a downwardly open, partially gastight storage space, which forms the geothermal energy accumulator, **characterised in that** heat (10) is supplied to the heat storage medium of the geothermal energy accumulator (80) containing the unsaturated fluid by means of the at least one first system, said heat causing the heat storage medium and the fluid to heat up and the fluid to vaporise inside the geothermal energy accumulator (80) at substantially constant normal air pressure, as a result of which by way of the respective specific heat capacity/vaporisation enthalpy of the liquid and gaseous fluid a quantity of heat can be stored in the geothermal energy accumulator and said amount of heat is removed by means of the at least one second system (20) with condensation of the fluid and cooling of the heat storage medium of the geothermal energy accumulator (80) and the fluid (80) present in the geothermal energy accumulator for use of the heat in a domestic power plant, wherein the heat storage capacity of the heat storage medium of the geothermal energy accumulator (80) is controlled and regulated by supplying fluid to the geothermal energy accumulator (80) by way of the humidifier system (70), which is arranged at least in the region below the upper seal (600).

12. Method according to claim 11, **characterised in that** the condensation of the fluid automatically leads to a re-humidification of the geothermal energy accumulator (80).

13. Method according to claim 11, **characterised in that** the simultaneous heat input and heat removal causes the temperature of the heat storage medium and the fluid to be increased or reduced layer by layer and causes the fluid present in the geothermal energy accumulator (80) to vaporise or condense from the bottom upwards as a result of the temperature/vapour pressure difference occurring in the layers, and conversely as a result of the increasing absorption effect as the temperature decreases in relation to the vapour pressure, fluid condensed on the second part-system (20) is evenly distributed on the surfaces of the solid components of the thermal storage medium, passes into the vicinity of the first part-system (10) again for heat input where the described process is repeated.

14. Method according to claim 11, **characterised in that** an absolute and/or relative humidity (p, ϕ) and a temperature (T) of the heat storage medium of the geothermal energy accumulator (80) are measured in the geothermal energy accumulator (80).

15. Method according to claim 11, **characterised in that** with the vaporisation of the fluid or the reduction in concentration of the retained water a system ready for the re-humidification is provided in an abstract manner to receive the condensate forming as a result of the release of vaporisation heat.

## Revendications

1. Accumulateur géothermique pour une utilisation énergétique domestique, comportant un système d'humidification (70), qui est constitué d'une masse accumulatrice de chaleur contenant un fluide non saturé, qui comprend au moins un premier sous-système pour l'apport d'énergie thermique et, à une distance définie, au moins un deuxième sous-système destiné à prélever l'énergie thermique, les systèmes étant agencés, avec leurs sous-systèmes respectifs apportant et prélevant la chaleur, dans un espace accumulateur ouvert en bas, réalisé de manière partiellement étanche aux gaz et qui constitue l'accumulateur géothermique, **caractérisé en ce qu'**il en résulte au moins une imperméabilisation (600, 60S) aux gaz, de type cloche en haut et de forme circulaire sur les côtés, de l'espace accumulateur (40) de l'accumulateur géothermique (80), de sorte que de la chaleur (10) peut être amenée par le au moins un premier système jusqu'au milieu accumulateur, contenant le fluide non saturé, de l'accumulateur géothermique (80), ladite chaleur provoquant, à l'intérieur de l'accumulateur géothermique (80) et dans le cas d'une pression atmosphérique normale essentiellement constante, le chauffage de la masse accumulatrice de chaleur et du fluide et une évaporation du fluide, grâce à quoi une quantité de chaleur peut être accumulée dans l'accumulateur géothermique (80) à l'intérieur de l'imperméabilisation (600, 60S) de type cloche, par l'intermédiaire de la capacité thermique/l'enthalpie d'évaporation spécifique respective du fluide sous forme liquide et gazeuse, ladite quantité de chaleur étant prélevée par l'intermédiaire du au moins un deuxième système (20) avec condensation du fluide et avec refroidissement de la masse accumulatrice de chaleur de l'accumulateur géothermique (80) et du fluide présent dans l'accumulateur géothermique (80) en vue d'une utilisation de la chaleur dans une centrale d'énergie domestique, le système d'humidification (70) étant agencé au moins dans le secteur situé sous l'imperméabilisation (600) supérieure.

2. Accumulateur géothermique selon la revendication 1, **caractérisé en ce que** les imperméabilisations (600, 60S) supérieure et latérale circulaire représentent selon l'exigence minimum un pare-vapeur (60B), qui est constitué
d'un film étanche à l'eau et à la vapeur ou
d'un béton imperméable à l'eau ou
de plaques de béton avec des panneaux en matière plastique/d'isolation étanches à l'eau et étanches à la vapeur, collés ou soudés, ou similaires.

3. Accumulateur géothermique selon la revendication 1, **caractérisé en ce que**
une première couche fonctionnelle supérieure et/ou une troisième couche fonctionnelle inférieure (60A, 60C), en tant qu'imperméabilisation supérieure (600) et
une première couche fonctionnelle extérieure et/ou une troisième couche fonctionnelle intérieure (60A, 60C), en tant qu'imperméabilisation latérale (60S)
peuvent être affectées au pare-vapeur (60B).

4. Accumulateur géothermique selon la revendication 3, **caractérisé en ce que** les première et/ou troisième couches fonctionnelles (60A, 60C) respectives sont réalisées sous la forme d'une couche de protection et/ou d'une couche d'isolation et/ou d'une couche élastique et/ou d'une couche de drainage.

5. Accumulateur géothermique selon l'une quelconque des revendications 1 à 4, **caractérisé en ce que** l'imperméabilisation (60) présente, dans le secteur supérieur (600) de l'accumulateur géothermique (80) réalisé sous la forme d'un espace accumulateur (40), une conception commune en couches, qui est constituée de la première couche fonctionnelle supérieure et de la troisième couche fonctionnelle inférieure (60A, 60C) délimitant respectivement la deuxième couche par e-vapeur (60B) intermédiaire et le système d'humidification (70).

6. Accumulateur géothermique selon la revendication 1, **caractérisé en ce que** l'imperméabilisation (60) présente, dans le secteur latéral circulaire (60S) de l'accumulateur géothermique (80) réalisé sous la forme d'un espace accumulateur (40), une conception commune en couches, qui est constituée d'une première couche fonctionnelle extérieure et d'une troisième couche fonctionnelle intérieure (60A, 60C) délimitant la deuxième couche par e-vapeur (60B) intermédiaire.

7. Accumulateur géothermique selon l'une quelconque des revendications 4 à 6, **caractérisé en ce que** des tapis de feutre résistant aux intempéries ou des panneaux d'isolation à élasticité permanente ou similaires sont utilisés en tant que couche de protection et/ou couche élastique et/ou couche d'isolation et/ou couche de drainage (60A, 60C) pour les première et/ou troisième couches fonctionnelles.

8. Accumulateur géothermique selon la revendication 1, **caractérisé en ce que** le système d'humidification (70) de l'accumulateur géothermique (80) est réalisé sous la forme d'un agencement de conduite en couches à la manière d'un dispositif de drainage.

9. Accumulateur géothermique selon la revendication 1, **caractérisé en ce qu'**au moins un capteur de température (90) et au moins un capteur d'humidité (100) sont agencés en vue de déterminer la température (30) et l'humidité absolue et/ou relative (p, ϕ) de la plage optimale de la capacité d'accumulation thermique de la masse accumulatrice de chaleur, contenant un fluide, de l'accumulateur géothermique (80), de sorte que la concentration du fluide dans le fond peut être commandée et régulée grâce au système d'humidification (70) dans la plage de fonctionnement souhaitée, et ainsi être optimisée.

10. Accumulateur géothermique selon la revendication 1, **caractérisé en ce que** le au moins un premier système (10), avec son sous-système, situé à l'extérieur de l'accumulateur géothermique (80), du premier système (10), destiné à l'apport d'énergie thermique dans l'accumulateur géothermique (80) est une installation solaire thermique ou un absorbeur refroidissant un dispositif photovoltaïque, un système fonctionnant sur la base de la chaleur de processus extractible d'autres systèmes et/ou une installation conventionnelle de production de chaleur ou une alimentation énergétique pour l'élément rayonnant du système.

11. Procédé de commande et régulation d'un accumulateur géothermique pour l'utilisation énergétique domestique, comportant un système d'humidification (70), qui est constitué d'une masse accumulatrice thermique contenant un fluide non saturé, qui comprend au moins un premier sous-système pour l'apport d'énergie thermique et, à une distance définie, au moins un deuxième sous-système destiné à prélever l'énergie thermique, les systèmes étant agencés, avec leurs sous-systèmes respectifs apportant et prélevant la chaleur, dans un espace accumulateur ouvert en bas, réalisé de manière partiellement étanche aux gaz et qui constitue l'accumulateur géothermique (80), **caractérisé en ce** de la chaleur (10) est amenée par le au moins un premier système jusqu'à la masse accumulatrice de chaleur, contenant le fluide non saturé, de l'accumulateur géothermique (80), ladite chaleur provoquant, à l'intérieur de l'accumulateur géothermique (80) et dans le cas d'une pression atmosphérique normale essentiellement constante, le chauffage de la masse accumulatrice de chaleur et du fluide et une évaporation du fluide, grâce à quoi une quantité de chaleur peut être accumulée dans l'accumulateur géothermique (80) par l'intermédiaire de la capacité thermique/l'enthalpie d'évaporation spécifique respective du fluide sous forme liquide et gazeuse, ladite quantité de chaleur étant prélevée par l'intermédiaire du au moins un deuxième système (20) avec condensation du fluide et avec refroidissement de la masse accumulatrice de chaleur de l'accumulateur géothermique (80) et du fluide présent dans l'accumulateur géothermique (80) en vue d'une utilisation de la chaleur dans une centrale d'énergie domestique, la capacité d'accumulation thermique de la masse accumulatrice de chaleur de l'accumulateur géothermique (80) étant commandée et régulée en amenant du fluide à l'accumulateur géothermique (80) par l'intermédiaire du système d'humidification (70) qui est agencé au moins dans le secteur situé sous l'imperméabilisation (600) supérieure.

12. Procédé selon la revendication 11, **caractérisé en ce que** la condensation du fluide provoque automatiquement une humidification en retour de l'accumulateur géothermique (80).

13. Procédé selon la revendication 11, **caractérisé en ce que** l'apport de chaleur et le prélèvement de chaleur simultanés provoquent une élévation ou une diminution par couches de la température de la masse accumulatrice de chaleur et du fluide et, par l'intermédiaire de la différence de température/de pression de vapeur se mettant en place dans les couches, une évaporation ou une condensation du fluide présent dans l'accumulateur géothermique (80), du bas vers le haut et, à l'inverse, le fluide condensé au niveau du deuxième sous-système (20) se répartit régulièrement sur les surfaces des composants fixes de la masse accumulatrice de chaleur par l'intermédiaire de l'action d'adsorption s'intensifiant avec la diminution de la température par rapport à la pression de vapeur, parvient à nouveau, en vue d'un apport de chaleur, à proximité du premier sous-système (10), où la séquence décrite se répète.

14. Procédé selon la revendication 11, **caractérisé en ce qu'**une humidité absolue et/ou relative (p, ϕ) et une température (40) de la masse accumulatrice de chaleur de l'accumulateur géothermique (80) sont mesurées dans l'accumulateur géothermique (80).

15. Procédé selon la revendication 11, **caractérisé en ce qu'**un système prévu pour l'humidification en retour et destiné au prélèvement du condensat se formant lors de l'émission de la chaleur d'évaporation est créé de manière abstraite avec l'évaporation du fluide ou bien la baisse de concentration de l'eau irréductible.
